(19) Europäisches Patentamt
European Patent Office
Office européen des brevets

(11) **EP 1 855 405 A1**

(12) **EUROPEAN PATENT APPLICATION**
published in accordance with Art. 158(3) EPC

(43) Date of publication:
**14.11.2007 Bulletin 2007/46**

(51) Int Cl.:
**H04J 11/00** *(2006.01)* **H04B 7/26** *(2006.01)*

(21) Application number: **05816845.1**

(22) Date of filing: **15.12.2005**

(86) International application number:
**PCT/JP2005/023010**

(87) International publication number:
**WO 2006/092899 (08.09.2006 Gazette 2006/36)**

(84) Designated Contracting States:
**DE FR GB**

(30) Priority: **28.02.2005 JP 2005053934**

(71) Applicant: **MITSUBISHI ELECTRIC CORPORATION**
**Chiyoda-ku**
**Tokyo 100-8310 (JP)**

(72) Inventor: **USUI, Tsutomu,**
**Mitsubishi Electric Corporation**
**Tokyo 1008310 (JP)**

(74) Representative: **Pfenning, Meinig & Partner GbR**
**Patent- und Rechtsanwälte**
**Theresienhöhe 13**
**80339 München (DE)**

(54) **COMMUNICATION DEVICE AND COMMUNICATION METHOD**

(57) Based on interference electric power attributed to a delayed wave, interference electric power attributed to a signal from another non-targeted terminal or a base station, and noise electric power, in order to obtain an index for further exactly representing the signal quality, the combination of a desired-signal / undesired-signal ratio 1 (referred to as DUR1) that is a power ratio of a signal component to an interference component either from another terminal of a serving cell or from a terminal or a base station, etc. of neighborhood cells and a noise component, and a desired-signal / undesired-signal ratio 2 (referred to as DUR2) that is a power ratio of a signal component to an inter-symbol interference component and an inter-carrier interference component attributed to the delayed wave is included in the index of the signal quality. A channel-impulse-response estimation unit 10 calculates a channel-impulse response from a received signal and a previously-held pilot symbol, and a desired-signal / undesired-signal ratio 2 estimation unit 15 estimates DUR2, using the channel-impulse response. A desired-signal / undesired-signal ratio 1 estimation unit 16 estimates DUR1 using a pilot symbol included in a burst. A modulation-condition selection unit 11 determines a transmission parameter to be applied, using DUR1 and DUR2.

FIG. 1

EP 1 855 405 A1

**Description**

TECHNICAL FIELD

The present invention relates to communication apparatuses and communication methods that can communicate digital wireless signals one-to-one interactively.

BACKGROUND ART

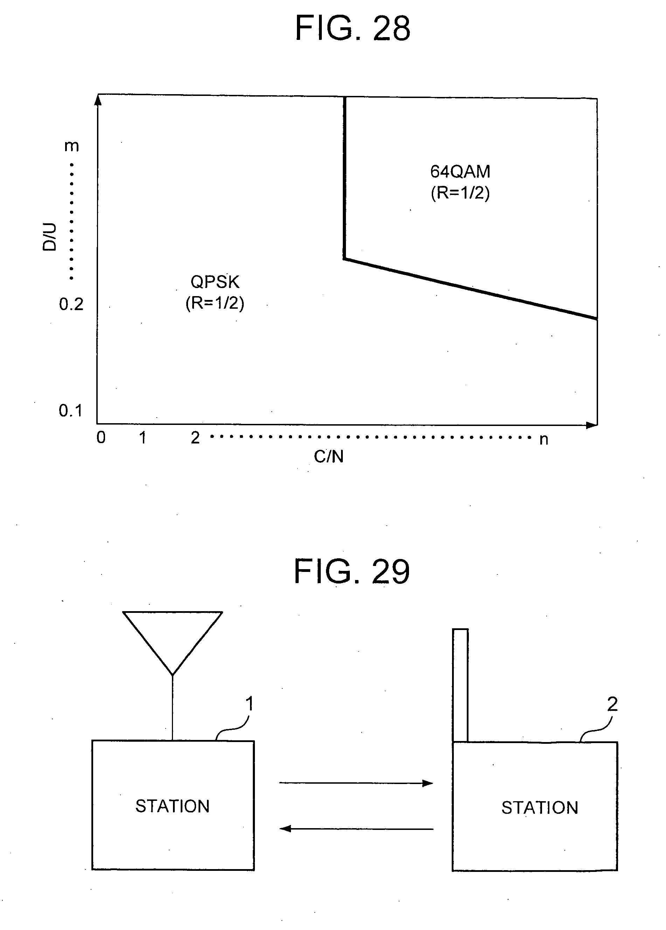

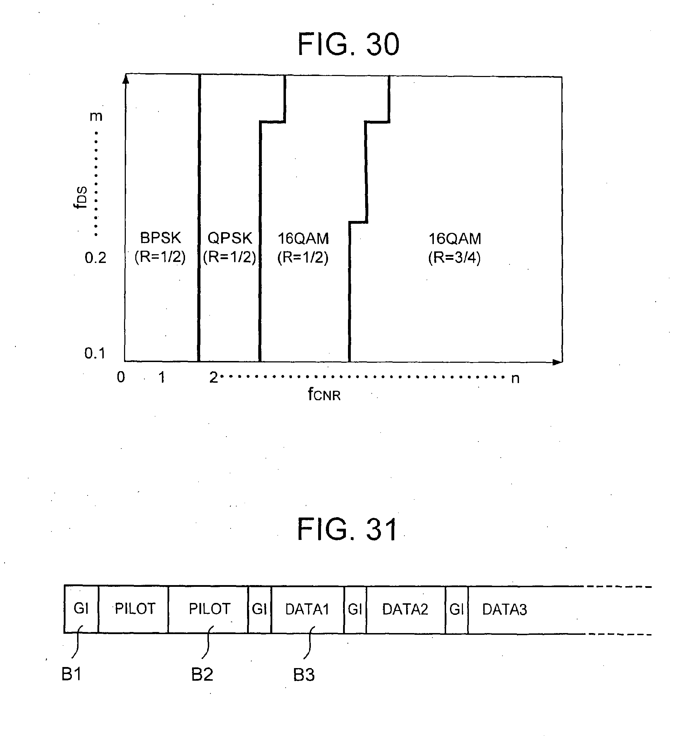

Hereinafter, a conventional technology is explained. Fig. 29 is a configuration view of a conventional broadband wireless transmission system, for example, disclosed in Non-Patent Document 1, which represents that a station 1 and a station 2 perform one-to-one coordinate transmission-reception operations with each other. In this case, the station 1 may be used as a base station, while the station 2 may be used as a mobile station; and its reverse case may also be possible. Moreover, the station 1 may be used as the mobile station, while the station 2 may be used as another mobile station. In this conventional broadband wireless transmission system, a modulation condition (such as a modulation type, a coding rate, and an information transmission speed) to be applied is selected based on whether the transmission-environment condition (such as the transmission quality) is satisfied or not. Fig. 30 is a view representing an example of the transmission-environment condition that is used when the modulation condition is selected in the conventional broadband wireless transmission system illustrated in Fig. 29. In Fig. 30, the horizontal axis is a carrier-to-noise ratio (CNR), while the vertical axis is an index representing a delay spread (DS) that indicates the standard deviation of a receiving level. Moreover, Fig. 31 is a view representing an example of a conventional burst format propagating through a wireless transmission channel; here, as illustrated in this figure, the burst is provided with a guard interval B1 corresponding to signal transmission delay, etc., pilot symbols B2 being known patterns predetermined between a transmitting station and a receiving station, and a data symbol B3. Here, although two pilot symbols B2 are included in the burst, it is premise that the data patterns are identical or approximately identical to each other. This premise is also applied to all embodiments of the present invention.

Next, an operation of the conventional technology is explained. In a conventional receiver, by calculating the cross-correlation between a transmission-side pilot symbol included in a received signal and a pilot symbol that has been previously held by the receiving side, a channel impulse response (also called as a delay profile) is obtained in which the cross-correlation value takes the peak at the points when the advanced wave reaches, and when at least one of the delayed waves reaches; then, using the channel impulse response, the delay spread $f_{DS}$ indicating the standard deviation of the cross-correlation value and the carrier-to-noise ratio $f_{CNR}$ are estimated. When the estimation is performed, the delay spread $f_{DS}$ and the carrier-to-noise ratio $f_{CNR}$ are obtained using the following equations.

$$f_{DS} = \frac{\sum_{n=1}^{N-1} \left\| |c_n| - |c_{n+1}| \right\|}{\sum_{n=1}^{N} |c_n|} \cdots\cdots\cdots\cdots\cdots\cdots\cdots (1)$$

$$f_{CNR} = \frac{\sum_{n=1}^{N} |c_n|}{\sum_{i=1}^{2} \sum_{n=1}^{N} \left\| |s_{n,i}| - |c_n| \right\|} \cdots\cdots\cdots\cdots\cdots\cdots (2)$$

$$c_n = \frac{1}{2}\sum_{i=1}^{2} s_{n,i} \quad \cdots\cdots\cdots\cdots\cdots\cdots\cdots\cdots\cdots\cdots (3)$$

$$s_{n,i} = \frac{r_{n,j} \bullet d_n^*}{\left|d_n\right|^2} \quad \cdots\cdots\cdots\cdots\cdots\cdots\cdots\cdots\cdots\cdots (4)$$

where $d_n$ is a pilot-signal bit-pattern, N is the number of subcarriers, and $r_{n,i}$ is the FFT calculation result corresponding to the $n^{th}$ subcarrier of the $i^{th}$ symbol.

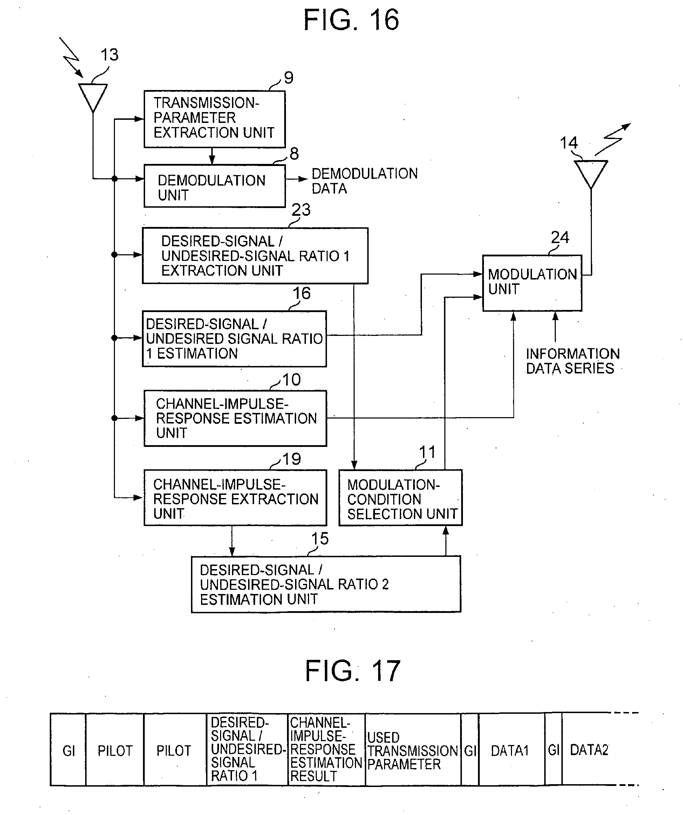

Here, based on the relationship between the estimated delay spread $f_{DS}$ and the estimated carrier to noise ratio $f_{CNR}$, and by referring to Fig. 30, the modulation condition (such as the modulation type, the coding rate, and the information transmission speed) to be applied is selected. That is, Fig. 30 represents that the more the $f_{CNR}$ value on the horizontal axis increases, the more the signal quality improves, and that the more the $f_{DS}$ value on the vertical axis increases, the more the signal quality deteriorates. Therefore, under a condition where the transmission environment is satisfied, because the $f_{CNR}$ value increases, based on this $f_{CNR}$ value and by referring to Fig. 30, 16QAM, etc. in which high-efficiency transmission is enabled is selected. On the other hand, under a condition where the transmission environment is not satisfied, because the $f_{CNR}$ value decreases, based on this $f_{CNR}$ value and by referring to Fig. 30, BPSK etc. that can also response to an inadequate environment is selected. Moreover, also under a condition where the $f_{CNR}$ value is relatively large and the transmission environment is satisfied, when the $f_{DS}$ value increases, the signal quality gradually deteriorates; therefore, when the $f_{DS}$ value reaches a predetermined value, even if the $f_{CNR}$ value is equal to that value, by referring to Fig. 30, for example, 16QAM (R = 3/4) is not selected, but 16QAM (R = 1/2) that can response to a more deteriorated transmission environment is selected. Here, R is the coding rate.

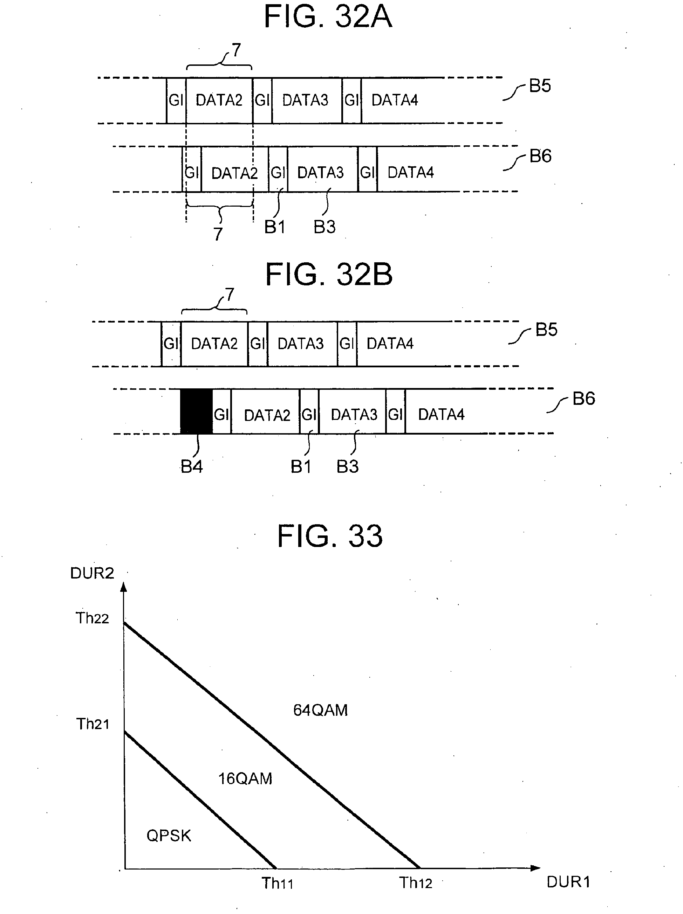

Fig. 32 is views representing burst-timing relationships between the advanced wave and the delayed wave received by the receiver, in which Fig. 32(a) is a view representing a case when the delay time of the delayed wave is shorter than the guard interval, while Fig. 32(b) is a view representing a case when the delay time of the delayed wave is longer than the guard interval. In Fig. 32(a) and (b), FFT (Fast Fourier Transform) windows 7 and an interference component B4 are represented at advanced waves B5 and at delayed waves B6 that have been received to be delayed because of the wave having passed through another path. The FFT windows 7, for performing FFT of the received data, are time-axis zones for clipping each data set from the received signal, and can be created by two methods. In the first method, the timing of the advanced wave is extracted based on the channel-impulse response created by the cross-correlation between the received signal and the known pilot symbol; thus, the point when a pilot-symbol time predetermined by this advanced-wave timing and a guard-interval (hereinafter may be referred to as GI) time have passed is set as the starting point of the FFT window. Because the FFT-window time is equal to the predetermined data time, the FFT window can be created. In the second method, when the modulation type is OFDM (Orthogonal Frequency Division Multiplexing), it is used that the content of each receiving-data-set tail portion and the content of the guard-interval GI positioned immediately before the data set are completely equal to each other; thus, by taking the autocorrelation between each receiving-data tail-portion and GI that positioned immediately before the data, the correlation value takes the peak at the GI starting point; therefore, the point when taking this peak is set as the GI starting point, and the point when the predetermined GI time has passed from this GI starting point is set as the FFT window starting point. Because the FFT window time is equal to the predetermined data time, the FFT window can be created.

An OFDM receiver demodulates the received wave by clipping, using the FFT window, each data from the received signal, and by performing the FFT operation. Next, the relationship between the FFT window and the FFT operation is explained. As illustrated in Fig. 32(a), when the delay time of the delayed wave from the advanced wave is within the guard interval GI, in the OFDM system, the tail-portion content of "Data 2" is completely equal to the content of the guard interval GI positioned immediately before "Data 2"; therefore, the result that is obtained from "Data 2" extracted by the advanced-wave FFT window being transformed from the time axis to the frequency axis using the FFT operation, and the result that is obtained from a part of the guard interval GI and the data 2 (a portion represented by Numeral 7 of the delayed wave B6 in Fig. 32(a)) extracted and obtained by the FFT window which is identical to the FFT window using the delayed wave by the advanced wave being transformed from the time axis to the frequency axis using the FFT operation give the same symbol frequency components. Therefore, if the delay time of the delayed wave is within the time corresponding to the GI time from the wave front of the advanced wave, the processing can be satisfactorily performed. However, if the delay time of the delayed wave exceeds the time corresponding to the GI time from the wave front of the advanced wave, as represented as the painted portion in Fig. 32(b), a delayed-wave component B4 that exceeds the time passing the GI time from the wave front of the advanced wave is the component of another symbol different from that of "Data 2", which gives inter-symbol interference in response to the symbol of the advanced-wave "Data 2". This interference power increases with the delay amount of the delayed wave.

[Non-Patent Document 1] "A NEW FREQUENCY-DOMAIN LINK ADAPTATION SCHEME FOR BROADBAND OFDM SYSTEMS" VTC'99 p253-257.

DISCLOSURE OF THE INVENTION

PROBLEM TO BE SOLVED BY THE INVENTION

In the prior art, as described above, the delay spread has been used as the parameter for selecting the modulation condition; however, because the delay spread is the standard deviation of a channel-impulse-response receiving level, although the delay spread has also increased with the delay amount of a delayed wave and with the amount of power, a problem has occurred that the interference power due to the delayed wave is not directly represented.

Moreover, in a case in which communication is performed among a plurality of cells, due to signals from other terminals of a serving cell or signals from neighborhood cells being leaked in, interference waves occur in the serving cell, and the receiving sensitivity deteriorates; consequently, a problem has occurred that the communication may be disconnected. However, in the prior art, the carrier-to-noise ratio has been used as the parameter for selecting the modulation condition; therefore, a problem has occurred that the interference effect is not included.

An objective of the present invention, which has been made to solve the foregoing problems, is to obtain an index that represents the signal quality further exactly, based on the interference power due to the delayed wave, the interference power due to the signal transmitted from a non-targeted other terminal or base station; and the noise power. Here, it is premise that a network used for the scope of the present invention includes a wired and a wireless networks.

MEANS FOR SOLVING THE PROBLEMS

A receiver according to the present invention includes a means for receiving through a network a signal including a transmission parameter such as a modulation type and an information data series modulated using the transmission parameter, for extracting the transmission parameter from the received signal, and for demodulating the information data series using the extracted transmission parameter.

ADVANTAGEOUS EFFECT OF THE INVENTION

According to the present invention, in the OFDM modulation / demodulation system, the modulation condition (modulation type, coding rate, and information transmission speed, etc.) is adaptively changed according to these estimated desired-signal / undesired-signal ratio 1 and desired-signal / undesired-signal ratio 2; therefore, an effect is obtained that at least one of system-throughput characteristics and packet-error characteristics can be improved compared to the conventional system.

BRIEF DESCRIPTION OF DRAWINGS

Fig. 1 is a configuration view illustrating Embodiments: 4 and 5 of a communication system according to the present invention;
Fig. 2 is a configuration view illustrating a communication system in Embodiments 4 and 5, when a station 1 and a station 2 each having the configuration illustrated in Fig.1 communicate to each other;
Fig. 3 is a view illustrating an example of a burst format propagating through a broadband wireless transmission channel between the station 1 and the station 2 in Embodiments 4 and 5;
Fig. 4 is a flow chart representing an operation of the station 1 and the station 2 in Embodiments 4 and 5;

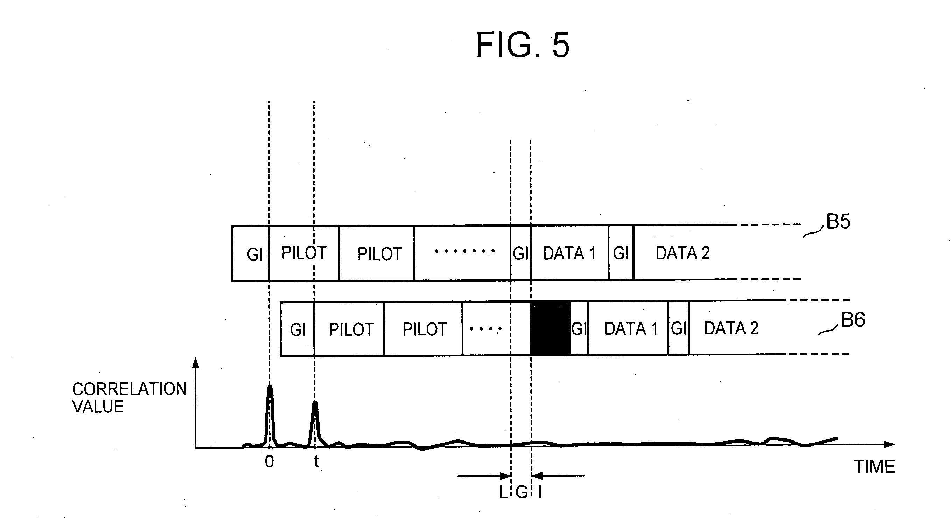

Fig. 5 is a view illustrating a timing relationship when the delayed-wave delay is longer than its guard interval;
Fig. 6 is a view illustrating an example of a circuit configuration of a channel-impulse-response estimation unit and a desired-signal / undesired-signal ratio 2 estimation unit;
Fig. 7 is another view illustrating an example of a circuit .configuration of a channel-impulse-response estimation unit and a desired-signal / undesired-signal ratio 2 estimation unit;

Fig. 8 is a view illustrating a relationship between an advanced wave and a delayed wave in an OFDM modulation / demodulation system;

Fig. 9 is an explanatory view illustrating interference due to another frequency component at a Nyquist point;

Fig. 10 is a configuration view illustrating Embodiment 7 of a communication system according to the present invention;

Fig. 11 is a view illustrating an example of a burst format propagating through the broadband wireless transmission channel between the station 1 and the station 2 in Embodiment 7;

Fig. 12 is a flow chart representing an operation of the station 1 and the station 2 in Embodiment 7;

Fig. 13 is a configuration view illustrating Embodiment 9 of a communication system according to the present invention;

Fig. 14 is a view illustrating an example of a burst format propagating through the broadband wireless transmission channel between the station 1 and the station 2 in Embodiment 9;

Fig. 15 is a flow chart representing an operation of the station 1 and the station 2 in Embodiment 9;

Fig. 16 is a configuration view illustrating Embodiment 11 of a communication system according to the present invention;

Fig. 17 is a view illustrating an example of a burst format propagating through the broadband wireless transmission channel between the station 1 and the station 2 in Embodiment 11;

Fig. 18 is a flow chart representing an operation of the station 1 and the station 2 in Embodiment 11;

Fig. 19 is a configuration view illustrating Embodiment 13 of a communication system according to the present invention;

Fig. 20 is a view illustrating an example of a burst format propagating through the broadband wireless transmission channel between the station 1 and the station 2 in Embodiment 13;

Fig. 21 is a flow chart representing an operation of the station 1 and the station 2 in Embodiment 13;

Fig. 22 is a configuration view illustrating Embodiment 15 of a communication system according to the present invention;

Fig. 23 is a view illustrating an example of a burst format propagating through the broadband wireless transmission channel between the station 1 and the station 2 in Embodiment 15;

Fig. 24 is a flow chart representing an operation of the station 1 and the station 2 in Embodiment 15;

Fig. 25 is a configuration view illustrating Embodiment 17 of a communication system according to the present invention;

Fig. 26 is a view illustrating an example of a burst format propagating through the broadband wireless transmission channel between the station 1 and the station 2 in Embodiment 17;

Fig. 27 is a flow chart representing an operation of the station 1 and the station 2 in Embodiment 17;

Fig. 28 is a view illustrating an example of a modulation-condition selection table;

Fig. 29 is a configuration view illustrating a conventional broadband wireless transmission system and a system according to the present invention;

Fig. 30 is a view illustrating an example of an environmental condition used when a modulation condition is selected in the conventional broadband wireless transmission system;

Fig. 31 is a view illustrating an example of a conventional burst format propagating through the broadband wireless transmission channel;

Fig. 32 is a view illustrating a timing relationship between an advanced-wave burst and a delayed-wave burst received by a receiver;

Fig. 33 is a modulation-condition selection table according to Embodiment 1 (threshold lines are straight lines);

Fig. 34 is a modulation-condition selection table according to Embodiment 1 (threshold lines are curved lines);

Fig. 35 is a modulation-condition selection table according to Embodiment 2;

Fig. 36 is a modulation-condition selection table according to Embodiment 2;

Fig. 37 is a modulation-condition selection table according to Embodiment 3;

Fig. 38 is a view representing throughput characteristics according to Embodiment 1; and

Fig. 39 is a view representing throughput characteristics according to Embodiment 2.

EXPLANATION OF SYMBOLS

1: Station, 2: Station, 7: FFT window, 8: Demodulation unit, 9: Transmission-parameter extraction unit, 10: Channel-impulse response estimation unit, 11: Modulation-condition selection unit, 12: Modulation unit, 13: Receiving antenna, 14: Transmitting antenna, 15: Desired-signal / undesired-signal ratio 2 estimation unit, 16: Desired-signal / undesired-signal ratio 1 estimation unit, 17: Desired-signal / undesired-signal ratio 1 estimation unit, 18: Pilot-symbol extraction unit, 19: Channel-impulse-response extraction unit, 20: Modulation unit, 21: Desired-signal / undesired-signal ratio 2 extraction unit, 22: Modulation unit, 23: Desired-signal / undesired-signal ratio 1 extraction unit, 24: Modulation unit, 25: Modulation unit, 26: Transmission-parameter estimation unit, 27: Modulation unit, 28: Transmission-parameter memory unit, 29: Modulation unit, 401: Correlator, 402: Determination circuit, 403: $N^{th}$ power calculator, 404: Integrator, 405: $M^{th}$ power calculator, 406: Delay-amount detection circuit, 407: Integrator, 408: Divider, 409: Comparator.

BEST MODE FOR CARRYING OUT THE INVENTION

Hereinafter, embodiments according to the present invention are explained.

Embodiment 1.

A modulation-condition selection unit used in Embodiment 4 - Embodiment 18 determines a transmission parameter set using a desired-signal / undesired-signal ratio 1 (referred to as DUR1) that uses an interference component and a noise component from a non-targeted terminal or a base station, etc., and a desired-signal / undesired-signal ratio 2 (referred to as DUR2) that uses an interference component caused by a delayed wave; here, an example of an environmental condition used for the determination is represented in Fig. 33. The horizontal axis denotes DUR1, meanwhile the vertical axis denotes DUR2. Corresponding to the value of $DUR_{syn}$ expressed by Equation set (5), the transmission parameter set in the corresponding region of Fig. 33 are selected.

$$DUR_{syn} = \begin{cases} \left(k_1 \times DUR1^{l_1} + m_1\right)\%\left(k_2 \times DUR2^{l_2} + m_2\right) \\ \log\left\{\left(k_1 \times DUR1^{l_1} + m_1\right)\%\left(k_2 \times DUR2^{l_2} + m_2\right)\right\} \\ \ln\left\{\left(k_1 \times DUR1^{l_1} + m_1\right)\%\left(k_2 \times DUR2^{l_2} + m_2\right)\right\} \end{cases} \qquad (5)$$

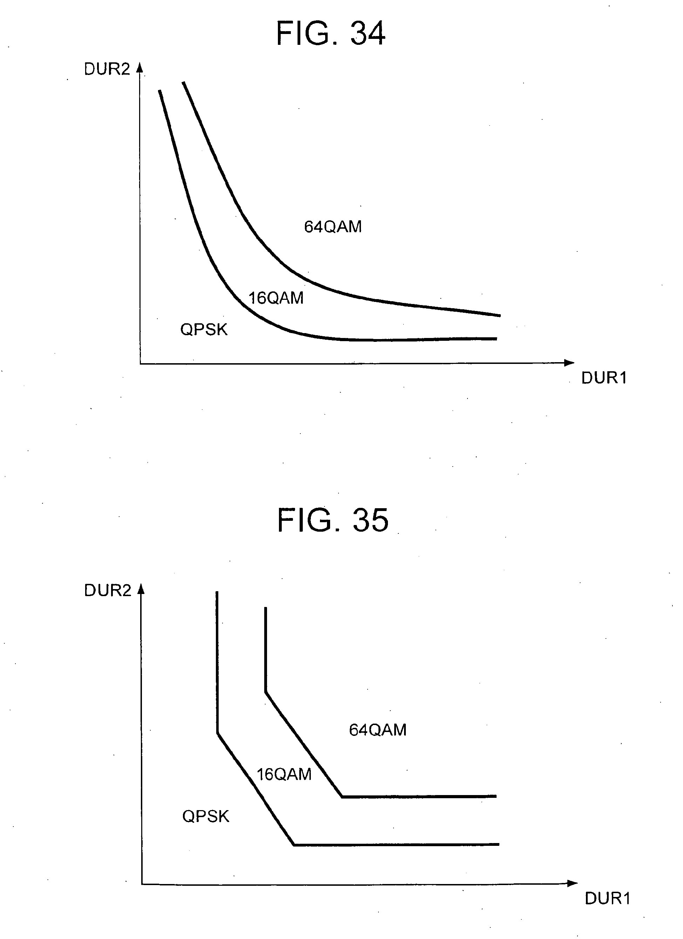

where $k_1$, $k_2$, $l_1$, $l_2$, $m_1$, and $m_2$ are constants, and "%" is any one of four-arithmetic operation symbols, "+", "-", "×", and "÷". Moreover, each value of DUR1 and DUR2 is any one of antilogarithms, common logarithms, and natural logarithms, and any one of three equations, the upper equation, the middle equation, and the lower equation, in Equation set (5), is assumed to be used for obtaining $DUR_{syn}$. Due to any one of the three equations in Equation set (5) being applied, due to the DUR1 value and the DUR2 value, which are a horizontal-axis value and a vertical-axis value, respectively, each being any one of antilogarithms, common logarithms, and natural logarithms, and due to the horizontal axis and the vertical axis each expressed in any one of antilogarithms, common logarithms, and natural logarithms, the threshold lines that define the quality of a wireless transmission channel become straight as represented in Fig. 33, or become curved as represented in Fig. 34.

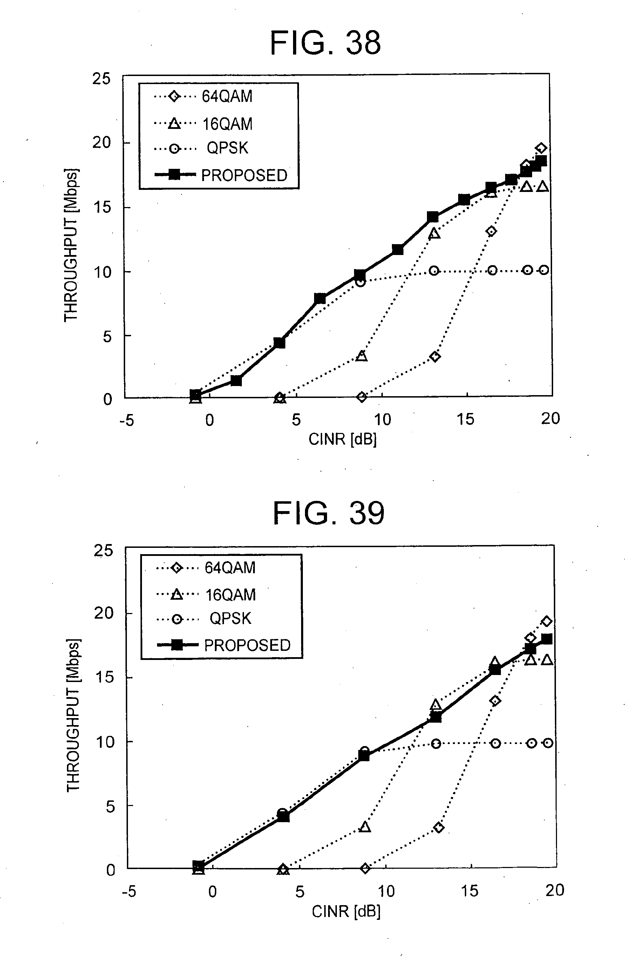

For example, assuming that $k_1 = k_2 = l_1 = l_2 = 1$, $m_1 = m_2 = 0$, "%" is "+", and DUR1 and DUR2 each are a common logarithm, the upper equation in Equation set (5) is used. Moreover, $Th_{11} = 27$ [dB], $Th_{12} = 37$ [dB], $Th_{21} = 27$ [dB], and $Th_{22} = 37$ [dB] are given in Fig. 33. Here, throughput characteristics, when $DUR_{syn}$ calculated in Fig. 33 selects a correspondent transmission parameter, and communicates, are illustrated in Fig. 38. In Fig. 38, the horizontal axis denotes CINR (ratio of noise power and interference power from a non-targeted terminal such as neighborhood cells to signal power), meanwhile the vertical axis denotes throughput. Moreover, "QPSK", "16QAM", and "64QAM" are throughput characteristics when the communication is performed by fixing its modulation system to QPSK, 16QAM, and 64QAM, respectively, meanwhile "Proposed" is throughput characteristics when the communication is performed by selecting the modulation system corresponding to the value of $DUR_{syn}$ as described above. It can be found in Fig. 38 that, by selecting the transmission parameter (in this case, a modulation type) corresponding to the $DUR_{syn}$ value, favorable throughput characteristics are obtained independently from CINR.

According to Embodiment 1, the transmission parameter such as the modulation type to be applied is determined based on the interference power caused by the delayed wave, the interference power from the non-targeted terminal from the neighborhood cells or from the base station, the noise power, and the signal power; therefore, selection of a more accurate modulation type, etc. than the conventional one is enabled.

Embodiment 2.

An environmental condition as represented in Fig. 33 was used in Embodiment 1; however, in a case in which DUR1 has a relatively large value, when the value of DUR2 becomes smaller than a predetermined value (the interference power due to the delayed wave increases), affection of DUR2 becomes dominant independently from the DUR1 value. Therefore, in the higher DUR1 region as represented in Fig. 35, by moving the threshold lines so that the affection of only DUR2 is reflected, the most suitable transmission parameter can be exactly selected. Similarly, in the lower DUR1 region, by moving the threshold lines so that the affection of only DUR1 is reflected, the most suitable transmission parameter can be exactly selected.

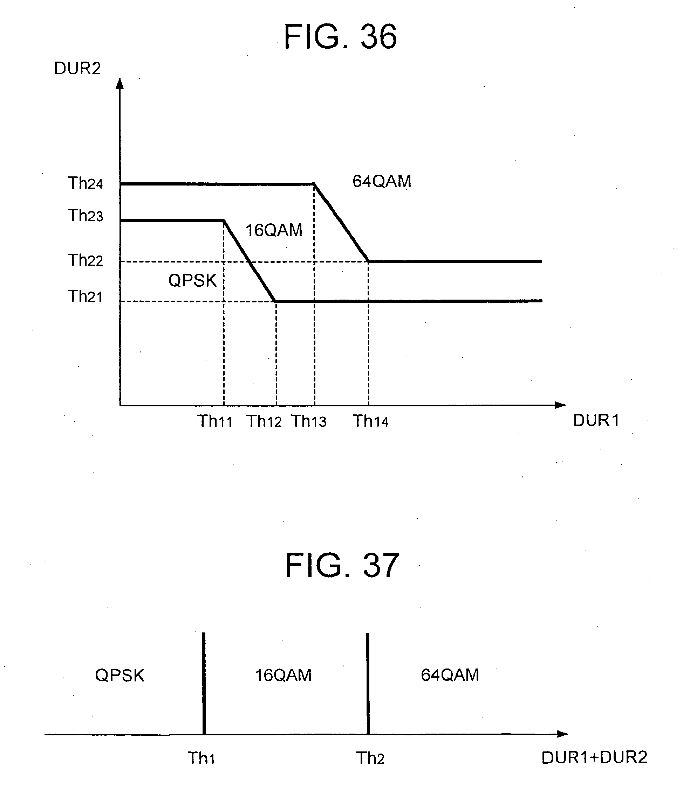

An environmental condition similar to that in Fig. 35 is illustrated in Fig. 36. As represented in Fig. 36, a threshold value of DUR2 is set for selecting a transmission parameter: set corresponding to each DUR1. For example, $Th_{11}$ = 13.2 [dB], $Th_{12}$ = 15.6 [dB], $Th_{13}$ =18.1 [dB], $Th_{14}$ = 20.5 [dB], $Th_{21}$ = 13.0 [dB], $Th_{22}$ = 16.0 [dB], $Th_{23}$ = 17.0 [dB], and $Th_{24}$ = 18.5 [dB] are given in Fig. 36. Throughput characteristics when using this environmental condition are illustrated in Fig. 39. The legends are similar to those in Embodiment 1. It can be found in Fig. 39 that preferable throughput characteristics are obtained independently from CINR.

According to Embodiment 2, the most suitable transmission parameter set can be more accurately selected than that in Embodiment 1, and the throughput characteristics can be improved.

Embodiment 3.

In Embodiment 1, two-dimensional expression as represented in Fig. 33 was used as the environmental condition; however, the condition can also be exchanged by a one-dimensional environmental condition as represented in Fig. 37.

According to Embodiment 3, an effect similar to that in Embodiment 1 can be obtained.

As described above, the methods of selecting the transmission parameter in the modulation-condition selection unit have been explained in Embodiments 1 - 3; however, the methods are not limited to those embodiments, but methods that can perform selection of the transmission parameter using DUR1 and DUR2 may be applicable.

Embodiment 4.

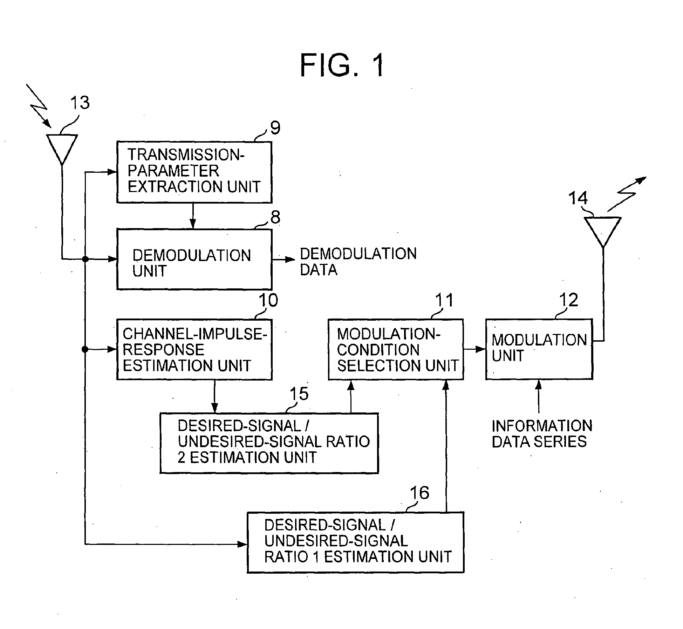

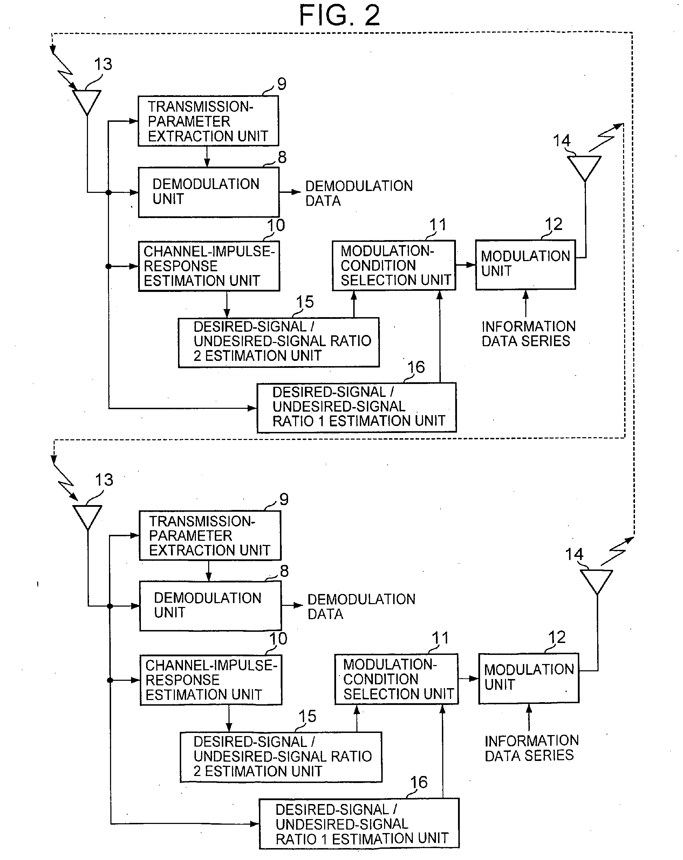

The configuration represented in Fig. 29 can also be used in Embodiment 4, and although it can also be applied to a case' in which the configurations between the station 1 and the station 2 are different from each other, in order to simplify the explanation, the configurations between the station 1 and the station 2 are assumed here to be equivalent to each other. Fig. 1 is a configuration view representing Embodiment 4 of a communication system according to the present invention; here, the station 1 and the station 2 have the same configuration. Fig. 2 is a configuration view illustrating a communication system when the station 1 and the station 2, each having the configuration illustrated in Fig. 1, communicate with each other. In Fig. 1, the communication system includes a demodulation unit 8; a transmission-parameter extraction unit 9, a channel-impulse-response estimation unit 10, a DUR2 estimation unit 15, a DUR1 estimation unit 16, a modulation-condition selection unit 11, a modulation unit 12, a receiving antenna 13, and a transmitting antenna 14.

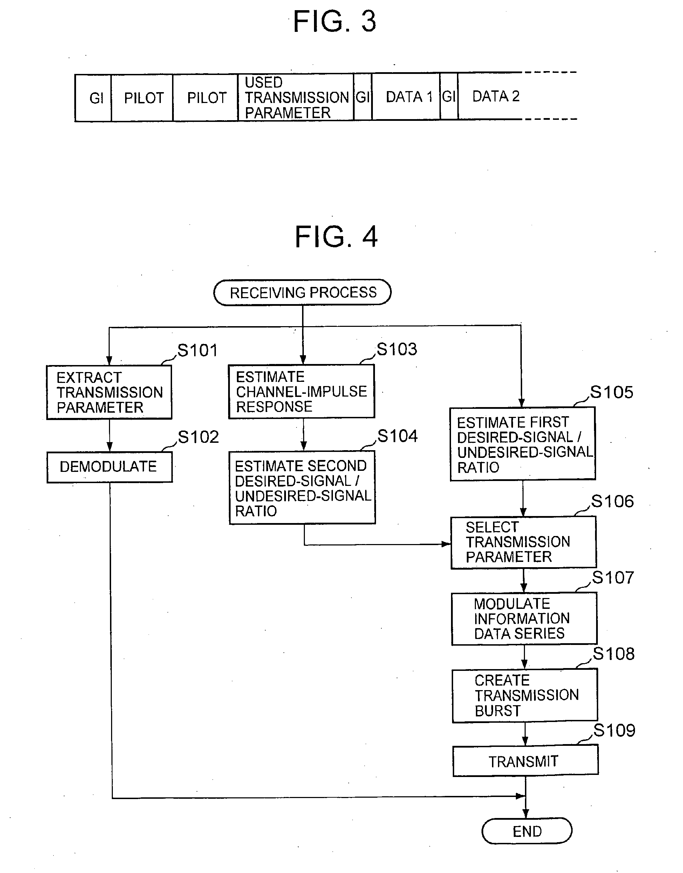

In Embodiment 4, Fig. 3 is a view illustrating an example of a burst format that propagates through a broadband wireless transmission channel of the station 1 and the station 2, and the configuration is the same as that in Fig. 31 except for "used transmission parameter set" used in the transmission-side station 1 being inserted between a pilot symbol and the first data portion ("GI" and "Data") in this figure. Moreover, Fig. 4 is a flow chart illustrating an operation of the station 1 and the station 2 according to Embodiment 4.

Next, an operation is explained. The method of selecting the transmission parameter in the modulation-condition selection unit is similar to that in Embodiments 1 - 3. A signal transmitted from the station 1 is called as a burst, propagates through the wireless transmission channel, and reaches the station 2. As represented in Fig. 3, the pilot symbol and "Data" modulated in accordance with a modulation type (such as BPSK, QPSK, or 16QAM) that the station 1 selects are included in this burst, and the modulation type and a coding rate, etc. used at this time are also included as a transmission parameter set in the burst. In the station 2, the transmission-parameter extraction unit 9 extracts, from the signal (burst) that the receiving antenna 13 has received, the transmission parameter set such as the modulation type that the station 1 has used; then, the extracted transmission parameter set is outputted to the demodulation unit 8 (Step S101). The demodulation unit 8 demodulates, using the transmission parameter set having been transmitted from the transmission-parameter extraction unit 9, the "Data" signal included in the burst received by the receiving antenna 13 (Step S102).

The channel-impulse-response estimation unit 10 obtains, by calculating the cross-correlation between a received signal wave form that has been received by the receiving antenna 13 and a pilot symbol that has been previously held by the station 2, a channel-impulse response whose cross-correlation value between at the point when the advanced wave reaches and at the point when at least one of the delayed waves reaches takes the peak; then, the channel-impulse response is communicated to the DUR2 estimation unit 15 (Step S103).

The DUR2 estimation unit 15 estimates DUR2, using the channel-impulse response communicated from the channel-impulse-response estimation unit 10 (Step S104). This is used as an indicator for indicating signal deterioration due to interference onto a given symbol by another symbol.

In this case, in the DUR2 estimation unit 15, in order to estimate DUR2, assuming that a point at which the value of the cross correlation between the advanced wave and the previously-held pilot symbol takes the peak is set "0", and that the predetermined time length of GI is given by "LGI", signal power D and interference power U are calculated by Equation (6) and Equation (7), respectively; then, based on the calculation result, the ratio of the signal power to the interference power D / U is calculated (hereinafter, this D / U calculation is referred to as D / U estimation).

$$D = k \sum_{t=0}^{LGI} |h(t)|^N \qquad (6)$$

$$U = l \sum_{t=LGI}^{p} (t - LGI)^L |h(t)|^M \qquad (7)$$

where k, l, N, L, and M are constants. h(t) denotes a channel-impulse response function; and t denotes a time. p is a value suitably determined corresponding to each condition of the wireless transmission channel. (These equations are an example, and the equations for estimating DUR2 are not limited to them.)

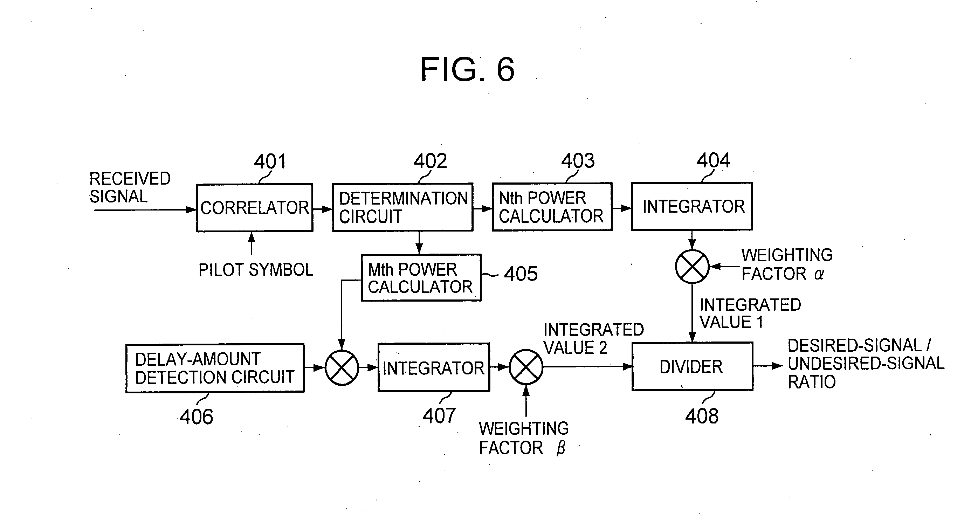

Fig. 6 is a view illustrating an example of a circuit configuration of the channel-impulse-response estimation unit 10 and the DUR2 estimation unit 15, which includes a correlator 401, a determination circuit 402, an $N^{th}$ power calculator 403, an integrator 404, an $M^{th}$ power calculator 405, a delay-amount detection circuit 406, an integrator 407, and a divider 408.

The correlator 401 calculates the cross-correlation between a received signal and a known pilot symbol, and communicates into the determination circuit 402 the channel-impulse response as the calculation result. If delay amount of the cross-correlation value from the correlator 401 is equal to or less than a guard interval, because inter-symbol interference of the delayed wave (interference due to another symbol of the delayed wave when the delay amount of the delayed wave exceeds the guard interval) is not involved, the determination circuit 402 communicates the cross-correlation value into the $N^{th}$ power calculator 403; on the other hand, if the delay amount of the cross-correlation value is larger than the guard interval, because inter-symbol interference is involved, the determination circuit 402 communicates the cross-correlation value into the $M^{th}$ power calculator 405. The $N^{th}$ power calculator 403 calculates the N-th power of the absolute value of the cross-correlation value having been received from the determination circuit 402, and communicates the calculation result into the integrator 404. The integrator 404 integrates the N-th-power-values received from the $N^{th}$ power calculator 403. By multiplying a weighting factor k to the integrated values obtained as a result, calculation is performed; then, the multiplication result, which is denoted as an integration-value 1, is communicated to the divider 408. The $M^{th}$ power calculator 405 calculates the M-th power of the absolute value of the cross-correlation value having been received from the determination circuit 402. The delay-amount detection circuit 406 outputs the value which is the L-th power of the value obtained by the subtraction of the guard-interval amount from the delay amount of the output from the $M^{th}$ power calculator 405, and multiplies by the outputted value from the $M^{th}$ power calculator 405; then, communicates the result into the integrator 407. The integrator 407 integrates the values each obtained by the multiplication of the value from the $M^{th}$ power calculator 405 by that from the delay-amount detection circuit 406. By multiplying a weighting factor 1 to the integrated values obtained as a result, calculation is performed; then, the multiplication result, which is denoted as an integration-value 2, is communicated to the divider 408. The divider 408 divides the integration-value 1 by the integration-value 2.

DUR2 obtained by such procedures is communicated to the modulation-condition selection unit 11.

The DUR1 estimation unit 16 estimates DUR1, using the pilot symbol included in the burst (Step S105). This is used as an indicator for indicating signal deterioration due to interference caused by signals from other terminals of a serving cell and signals from neighborhood cells, and due to noise.

In this case, in the DUR1 estimation unit 16, in order to estimate DUR1 using two identical pilot symbols "Pilot" as represented in Fig. 3, the signal power D and the interference power U are first calculated from the following Equations (8) and (9), respectively; then, DUR1 is estimated (calculated) by dividing the D value by the U value.

$$D = k \sum_{n=1}^{m} \frac{\left| C_{n1} + C_{n2} \right|^{N}}{4} \tag{8}$$

$$U = l \sum_{n=1}^{m} \left\{ \left| C_{n1} - \frac{C_{n1} + C_{n2}}{2} \right|^{M} \left| C_{n2} - \frac{C_{n1} + C_{n2}}{2} \right|^{M} \right\} \tag{9}$$

where k, l, N, and M are constants. Cni denotes the n-th sampling value of the i-th pilot symbol, while m is the sampling number during the single pilot-symbol period. Moreover, when N and M are "2", D and U represents the amount of the power (these equations are an example, the DUR1 estimation equations are not limited to these equations).

DUR1 obtained by such procedures is communicated to the modulation-condition selection unit 11.

The modulation-condition selection unit 11 determines, using DUR1 outputted from the DUR1 estimation unit 16 and DUR2 outputted from the DUR2 estimation unit 15, the transmission parameter such as the modulation type to be applied, and communicates this transmission parameter into the modulation unit 12 (Step S106). The modulation unit 12 modulates, using the transmission parameter communicated by the modulation-condition selection unit 11, an information data series including "GI" and "Data" (Step S107).

For example, in a case in which the QPSK modulation type and the 64QAM modulation type are adaptively applied, using DUR1. and DUR2 estimated as described above, when the value of DUR2 in response to DUR1 is smaller than a threshold value, the modulation-condition selection unit 11 applies the QPSK modulation type whose resistance is relatively high in response to the interference power. As a result, it can be expected that the probability of any packet error decreases. On the other hand, when the above value is larger than the threshold value, the modulation-condition selection unit 11 applies the 64QAM modulation type. As a result, it can be expected that throughput characteristics are improved.

The modulation unit 12 further creates the burst by adding, to modulated information data series, the predetermined pilot symbol and the transmission parameter such as the modulation type used for the modulation (Step S108). The burst created by this procedure is outputted from the antenna 14 to the wireless transmission channel (Step S109). Then, the signal outputted from the antenna propagates through the wireless transmission channel, and reaches the station 1. Moreover, an operation similar to that in the station 2 is also performed in the station 1.

According to this Embodiment 4, the transmission parameter set such as the modulation type to be applied based on the signal power, the interference power, and the noise power are determined; therefore, more suitable modulation-type selection, etc. than that in the conventional system is possible.

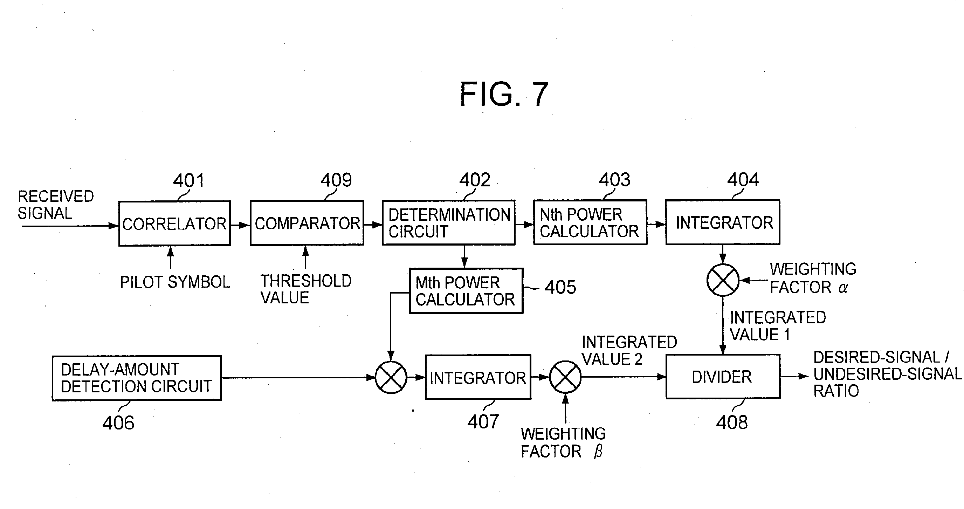

Moreover, in the above explanation, the correlator 401 has calculated the cross-correlation between the received signal and the pilot symbol that has been previously held by the receiver, and has directly outputted into the determination circuit 402 the obtained cross-correlation value as the channel-impulse response; however, any noise component, etc. is included in this cross-correlation value. Therefore, as illustrated in Fig. 7, the cross-correlation value obtained by the correlator 401 is compared with a value (threshold value) that a comparator 409 has preset; then, only a cross-correlation value having a larger value than this threshold value may be made to be outputted to the determination circuit 402. According to this configuration, because the noise component can be reduced, further accurate channel-impulse response can be outputted. Therefore, more accurate DUR2 becomes possible to be estimated; moreover, because the transmission parameter set such as the modulation type to be applied based on this DUR2 is determined, more suitable modulation-type selection, etc. becomes possible.

According to Embodiment 4, because the transmission parameter set such as the modulation type, etc. to be applied based on the signal power, the interference power, and noise power is determined, more suitable modulation-type selection, etc. than that in the conventional system is possible.

Embodiment 5.

Although an example of a case in which the station 1 and the station 2 have the same configuration to each other has been explained in Embodiment 4, a case in which the station 1 and the station 2 have different configurations from each other (for example, a case in which the station 1 is a base station, while the station 2 is a mobile terminal) is explained here. In this embodiment, although a first transmission parameter used for the modulation, etc. in the station 1 is assumed to adaptively vary corresponding to the quality of the wireless transmission channel, a third transmission parameter used for the modulation, etc. in the station 2 is assumed to be predetermined.

The station 1 transmits signals that have the first pilot symbol configured of a plurality of pilot symbols that are known information resources and are in a predetermined relationship to each other, the first transmission parameter including a modulation type, and the information data series modulated by this first transmission parameter. On the other hand, the station 2 transmits signals that have the first pilot symbol and an information data series modulated by the third transmission parameter including a predetermined modulation type.

Fig. 29 is also used in Embodiment 5. Regarding the configuration of the station 1, the transmission-parameter extraction unit 9 is omitted from the configuration represented in Fig. 1, and the other configuration is the same as that in Embodiment 4. On the other hand, regarding the configuration of the station 2; the channel-impulse-response estimation unit 10, the DUR1 estimation unit 16, the DUR2 estimation unit 15, and the modulation condition selection unit 11 are omitted from the configuration represented in Fig. 1.

Moreover, the burst format represented in Fig. 3 is also used for the burst transmitted from the station 1 to the station 2 in this Embodiment 5. The burst format transmitted from the station 2 to the station 1 is a format in which "used transmission parameter" is omitted from the burst format represented in Fig. 3. In the operational procedure of the station 1, Step S101 for extracting the transmission parameter set is omitted from the flowchart illustrated in Fig. 4, and the other configuration is the same as that in Embodiment 4. On the other hand, in the operational procedure of the station 2, Step S103 for estimating the channel-impulse response, Step S104 for estimating DUR2, Step S105 for estimating DUR1, and Step S106 for selecting the transmission parameter set are omitted from the flowchart illustrated in Fig. 4.

Next, an operation is explained. Signals transmitted from the station 1, which are called as a burst, propagates through the wireless transmission channel, and reaches the station 2. In this burst, as represented in Fig. 3, the first pilot symbol and "Data" that has been modulated by the modulation type (such as BPSK, QPSK, or 16QAM) selected by the station 1 are included; here, the modulation type used and the coding rate, etc. are also included in the burst as the first transmission parameter.

In the station 2, the transmission-parameter extraction unit 9 extracts, from the signals (burst) received by the receiving antenna 13, the first transmission parameter such as the modulation type used by the station 1; then, this extracted first transmission parameter is outputted to the demodulation unit 8 (Step S101). The demodulation unit 8 demodulates, using the first transmission parameter transmitted from the transmission-parameter extraction unit 9, the "Data" signals included in the burst received by the receiving antenna 13 (Step S102). The modulation unit 12 modulates, using the third transmission parameter that has been predetermined and is held by the station 2, the information data series including GI and "Data" (Step S107).

The modulation unit :12 further creates a burst by adding, to the modulated information data series, as the first pilot symbol a previously-held second pilot symbol whose content is the same as that of the first pilot symbol (Step S108). The burst created by this procedure is outputted from the antenna 14 to the wireless transmission channel (Step S109).

In the burst outputted from this antenna, the first pilot symbol and "Data" modulated by the modulation type held by the station 2 are included; however, the third transmission parameter that the station 2 has used is not included. Accordingly, a high-speed operation of the burst transmission can be achieved. Moreover, this burst propagates through the wireless transmission channel, and then reaches the station 1.

In the station 1, the demodulation unit 8 extracts the modulated "Data" signal from the signals (burst) received by the receiving antenna 13, and demodulates this extracted "Data" signal, using a fourth transmission parameter, previously held by the station 1, whose content is the same as that of the third transmission parameter (Step S102).

The channel-impulse-response estimation unit 10 obtains, by taking the cross-correlation between the received signal wave form that has been received by the receiving antenna 13 and the third pilot symbol whose content is the same as that of first pilot symbol, channel-impulse response in which the cross-correlation value takes peak at the points when the advanced wave reaches, and when at least one of the delayed waves reaches; then, this channel-impulse response is communicated to the DUR2 estimation unit 15 (Step S103).

Similarly to Embodiment 4, the DUR2 estimation unit 15 estimates, using the channel-impulse response communicated by the channel-impulse-response estimation unit 10, DUR2 (Step S104). This is used as an indicator for indicating signal deterioration due to interference to the given symbol by another symbol.

DUR2 obtained by this procedure is communicated to the modulation-condition selection unit 11.

Similarly to Embodiment 4, the DUR1 estimation unit 16 estimates, using the pilot symbol included in the burst, DUR1 (Step S105). This is used as an indicator for indicating signal deterioration due to interference caused by signals from other terminals of a serving cell and signals from neighborhood cells, and due to noise.

DUR1 obtained by this procedure is communicated to the modulation-condition selection unit 11.

Similarly to Embodiment 4, the modulation-condition selection unit 11 determines, using DUR1 outputted from the DUR1 estimation unit 16 and DUR2 outputted from the DUR2 estimation unit 15, a second transmission parameter such as the modulation type to be applied; then, this second transmission parameter is communicated to the modulation unit 12 (Step S106). The modulation unit 12 modulates, using the second transmission parameter communicated by the modulation-condition selection unit 11, the information data series including GI and "Data" (Step S107).

For example, in a case in which the QPSK modulation type and the 64QAM modulation type are adaptively applied, using DUR1 and DUR2 estimated as described above, when the value of DUR2 in response to DUR1 is smaller than a threshold value, the modulation-condition selection unit 11 applies the QPSK modulation type whose resistance is relatively high in response to the interference power. As a result, it can be expected that the probability of packet errors decreases. Moreover, when the above value is larger than the threshold value, the modulation-condition selection unit 11 applies the 64QAM modulation type. As a result, it can be expected that the throughput characteristics are improved.

The modulation unit 12 further creates the burst, by adding, to the modulated information-data series, the previously-held third pilot symbol and second transmission parameter such as the modulation type having been used for the modulation, as the first pilot symbol and the first transmission parameter, respectively (Step S108). The burst created by this procedure is outputted from the antenna 14 to the wireless transmission channel (Step S109). The signal outputted from the antenna propagates through the wireless transmission channel, and reaches the station 2. The same operation as that described above is performed again in the station 2. Then, the above operations are repeated between the station 1 and the station 2.

According to this Embodiment 5, because the third transmission parameter is not transmitted from the station 2 to the station 1, in addition to the effect of Embodiment 4, as compared with Embodiment 4, a high-speed operation of the burst transmission can be achieved.

Embodiment 6.

In Embodiment 4, as the interference power of DUR2, inter-symbol interference power due to other symbols has been explained as an example; however, inter-carrier interference power, due to orthogonal slip of the given symbol may be included. In Embodiment 6, the inter carrier interference power due to the orthogonal slip of the given symbol is explained.

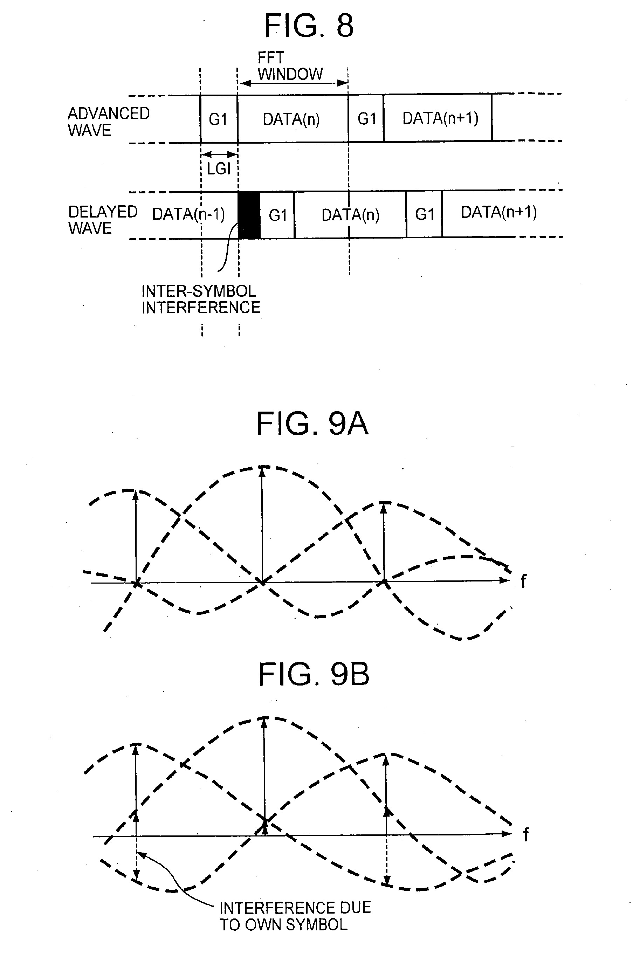

As illustrated in Fig. 8, in the advanced wave, when FFT is performed in response to each "Data" series, the corresponding "Data" is clipped. This operation is equivalent to multiply an FFT window that is a rectangular wave having a range agreeing to a range along the time axis of the corresponding "Data" by the corresponding "Data". Therefore, "Data" is transformed from the time axis to the frequency axis by FFT after being clipped by the FFT window; however, this operation is equivalent to convolve the sinc function obtained as a result that FFT is applied to the FFT window corresponding to each of a plurality of discrete spectral components appearing on the frequency axis due to FFT being applied to the Data series. In OFDM, when this convolving is performed, because sub-carriers whose number is integral multiple of the base frequency are used, all frequency components of the signal due to each sub-carrier becomes nil at a Nyquist point except for the sub-carrier center; therefore, as illustrated in Fig. 9(a), any interference does not affect the other frequency components sampled at each Nyquist point.

However, as represented in Fig. 8, in the delayed wave in which the delay time exceeds LGI, another symbol "Data" portion (including GI) of the delayed wave is mixed to the "Data" portion (including GI) of the advanced wave in the FFT window range. Therefore; in the case of the delayed wave, FFT is applied to the result obtained by summing a part of the other symbol "Data" range and a part of the given symbol "Data" range (exactly, including the GI component), which are clipped by short-range square windows corresponding to their respective time ranges. As a result that FFT has been applied to the square window of the short range on the time axis, the sinc function is extended along the frequency axis; meanwhile as a result in which FFT has been applied to the signal that is the part of the "Data" range clipped by the short-range square window, the sine function extended along the frequency axis is convolved with the FFT result of "Data". As a result, because the frequency component due to each sub-carrier of the signal does not become nil at any Nyquist point except for the sub-carrier center as represented in Fig. 9(b), the component that is not nil is summed to the other frequency component sampled at each Nyquist point; consequently, interference occurs. Accordingly, the result can also be included in the interference indicator.

Accordingly, because the interference power becomes more accurate, the more accurate transmission parameter than the above can be selected.

Moreover, although the signal power D expressed by Equation (6) was synthesized by the signal power of the advanced wave and that of the delayed wave in which the delay time is not longer than the guard interval, by adding to the signal power D the given-symbol signal power included in the delayed wave in which the delay time exceeds the guard interval, more accurate signal power can be obtained; therefore, the more exact transmission parameter than the above can be selected. Thus, the result can also be included in the signal power indicator.

According to this procedure, because the signal power becomes more accurate, the more accurate transmission parameter than the above can be selected.

For example, the signal components are configured of a signal component of the advanced wave, a signal component of the delayed wave in which the delay time from the advanced-wave signal component is not longer than the guard interval, and a signal component of the given symbol included in the delayed wave in which the delay time exceeds the guard interval; meanwhile the interference components are configured of inter-symbol interference due to the other symbols of the delayed wave when the delay time exceeds the guard interval, and inter-tarrier interference due to the given symbols of the delayed wave when the delay time exceeds the guard interval; then, DUR2 is calculated as expressed by Equation (10).

$$DUR2 = \frac{k \sum_{i=0}^{N_p} \frac{b_i^2}{(a_i + b_i)^2} P_i}{l \sum_{i=0}^{N_p} \frac{a_i}{a_i + b_i} P_i + m \sum_{i=0}^{N_p} \frac{a_i b_i}{(a_i + b_i)^2} P_i} \qquad (10)$$

where k, l, and m are constants. Moreover, Np denotes the coming number of the delayed wave; Pi denotes received power of the i-th coming wave (advanced wave is assumed to be the 0-th wave); $a_i$ denotes the time width that the other symbol leaks into the FFT range of the i-th coming wave; and $b_i$ denotes the time width that the given symbol is included in the FFT range of the i-th coming wave (the equation is an example, and the DUR2 estimation equation is not limited thereto.)

Embodiment 7.

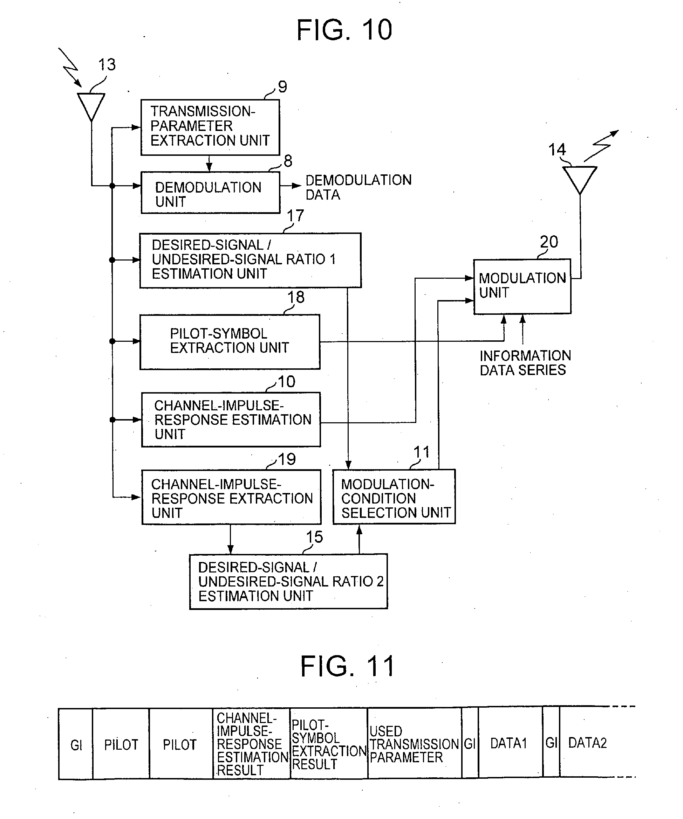

The configuration illustrated in Fig. 29 is also used in Embodiment 7, which can also be applied to a case in which the configuration of the station 1 and the configuration of the station 2 are different from each other; however, in order to simplify the explanation, the configuration of the station 1 and the configuration of the station 2 are assumed to be the same. Fig. 10 is a configuration view illustrating Embodiment 7 of a communication system according to the present invention, in which the station 1 and the station 2 have the same configuration. In Fig. 10, the same symbols as those in Fig. 1 denote the same or the equivalent members. The communication system includes a channel-impulse-response extraction unit 19 for extracting channel-impulse response from signals having been received by the receiving antenna 13, and for communicating the extracted channel-impulse response to the DUR2 estimation unit 15, a DUR1 estimation unit 17 for extracting a pilot symbol returned from signals having been received by the receiving antenna 13, and for estimating DUR1 using the extracted pilot symbol, a pilot-symbol extraction unit 18 for extracting a pilot symbol from signals having been received by the receiving antenna 13, and for communicating the pilot symbol to a modulation unit, and a modulation unit 20 for modulating an information data series using a transmission parameter set communicated from the modulation-condition selection unit 11, and for inserting into a transmission burst the estimation result of the channel-impulse-response estimation unit 10, the extraction result of the pilot-symbol extraction unit 18, the used transmission parameter set, and the pilot symbol.

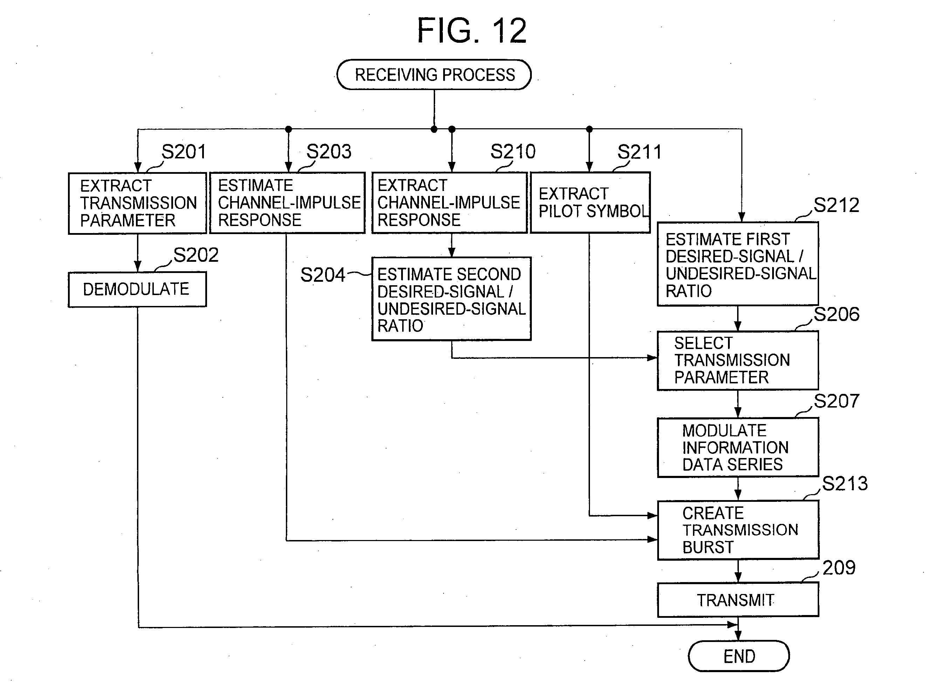

Fig. 11 is a view representing an example of a burst format propagating through a broadband wireless transmission channel between the station 1 and the station 2 in Embodiment 7, which is the same as the burst format in Fig. 3 except for "channel-impulse-response estimation result" and "pilot-symbol extraction result" to be used in the counter station being inserted between "Pilot" and "used transmission parameter set". Moreover, Fig. 12 is a flowchart illustrating an operation of the station 1 and the station 2 in Embodiment 7.

Next, an operation of Embodiment 7 is explained referring to Fig. 10 - Fig. 12. The selection method of the transmission parameter set by the modulation-condition selection unit is similar to that in Embodiments 1 - 3. The calculation method of DUR1 and DUR2 is similar to that in Embodiment 4 and Embodiment 6. The station 1 transmits to the wireless transmission channel, as the burst illustrated in Fig. 11, the pilot symbol "Pilot", the transmission parameter set such as a modulation type determined by the serving station (station 1 in this case), "channel-impulse-response estimation result" to be used in the counter station, "pilot-symbol extraction result" to be used in the counter station, and the information data series modulated using the transmission parameter set such as the modulation type determined by the serving station. This burst propagates through the wireless transmission channel, and reaches the antenna 13 of the station 2. In the station 2, the transmission-parameter extraction unit-9 extracts; from the signal (burst) received by the receiving antenna 13, the transmission parameter set such as the modulation type used by the station 1; then, the extraction unit 9 communicates this extracted transmission parameter set to the demodulation unit 8 (Step S201). Using the transmission parameter set communicated from the transmission-parameter extraction unit 9, the demodulation unit 8 demodulates the information data series included in the burst received by the receiving antenna 13 (Step S202).

The channel-impulse-response estimation unit 10 estimates the channel-impulse response, similarly to Embodiment 4, by calculating the cross-correlation between the received signal that the receiving antenna 13 has received and the pilot symbol that the station 2 has previously held, and, in order to announce this estimated channel-impulse response to the counter station, communicates first to the modulation unit 20 (Step S203).

Moreover, the channel-impulse-response extraction unit 19 extracts, from the signals received by the receiving antenna 13, "channel-impulse-response estimation result" to be used by the station 2; then, the extracted "channel-impulse-response estimation result" is communicated to the DUR2 estimation unit 15 (Step S210). The DUR2 estimation unit 15 calculates (estimates), based on this "channel-impulse-response estimation result", DUR2 similarly to Embodiment 4 and Embodiment 6 (however, the correlator 401 is necessary to be exchanged by an extraction unit for extracting the channel-impulse response), and then communicates this estimation result to the modulation-condition selection unit 11 (Step S204).

Furthermore, the DUR1 estimation unit 17 extracts, from signals received by the receiving antenna 13, "pilot-symbol extraction result" to be used by the station2, and calculates (estimates); based on the result, DUR1 similarly to Embodiment 4, and then communicates the estimation result to the modulation-condition selection unit 11 (Step S212). The pilot-symbol extraction unit 18 extracts, from signals received by the receiving antenna 13, the pilot symbol "pilot" to be used by the station 1, and then communicates to the modulation unit 20 (Step S211). Using DUR1 communicated from the DUR1 estimation unit 17 and DUR2 communicated from the DUR2 estimation unit 15, the modulation-condition selection unit 11 determines a parameter set (second transmission parameter set) of modulation conditions (a modulation type, a coding rate, and information transmission speed) to be applied, and then communicates the determination result to the modulation unit 20 (Step S206).

Using the second transmission parameter set communicated from the modulation-condition selection unit 11, the modulation unit 20 modulates the information data series including GI and "Data" (Step 5207). The modulation unit 20 further creates a burst by adding, to the modulated information data series, "channel-impulse-response estimation result" to be used by the counter station (the station 1 im this case) communicated from the channel-impulse-response estimation unit 10, "pilot-symbol extraction result" to be used by the counter station communicated from the pilot-symbol extraction unit 18, the transmission parameter set (the second transmission parameter set) such as the modulation type that the modulation-condition selection unit 11 has selected, and the pilot symbol (Step S213), and then outputs the burst from the antenna 14 to the wireless transmission channel (Step S209). Then, the signal outputted from the antenna propagates through the wireless transmission channel, and reaches the station 2. Moreover, an operation similar to that in the station 2 is also performed in the station 1.

According to this Embodiment 7, similar effect to that in Embodiment 4 can be obtained.

Embodiment 8.

In Embodiment 7, a case in which the station 1 and the station 2 have the same configuration has been explained as an example; however, a case in which: the configurations of the station 1 and the station 2 are different from each other (for example, a case in which the station 1 is a base station, while the station 2 is a mobile terminal) is explained here. In this embodiment, although the first parameter set used for the modulation, etc. in the station 1 is assumed to adaptively vary corresponding to the quality of the wireless transmission channel, the third parameter set used for the modulation, etc. in the station 2 is assumed to be predetermined.

The station 1 transmits signals having the first pilot symbol configured of a plurality of pilot symbols that are known information and are in a predetermined relationship to each other, having the first transmission parameter set including the modulation type, and having the information data series modulated by the first transmission parameter set. Moreover, the station 2 transmits signals having the first pilot symbol, a first channel-impulse response, the third pilot symbol, and the third transmission parameter set including the predetermined modulation type.

Fig. 29 is also used in this Embodiment 8. Regarding the configuration of the station 1, the transmission-parameter extraction unit 9, the pilot-symbol extraction unit 18, and the channel-impulse-response estimation unit 10 are omitted from the configuration represented in Fig. 10, and the other configuration is the same as that in Embodiment 7. Moreover, regarding the configuration of the station 2, the channel-impulse-response extraction unit 19, the DUR1 estimation unit 17, the DUR2 estimation unit 15, and the modulation-condition selection unit 11 are omitted from the configuration represented in Fig. 10.

Regarding the burst format transmitted from the station 1 to the station 2 in Embodiment 8, "transmission-channel-response estimation result" and "pilot-symbol extraction result" are omitted from the burst format represented in Fig. 11. Regarding the burst format transmitted from the station 2 to the station 1, "used transmission parameter set" is omitted from the burst format represented in Fig. 11. Regarding the operational procedure in the station1, Step S201 of extracting the transmission parameter set from the flowchart represented-in Fig. 12, Step S211 of extracting the pilot symbol, and Step S203 of estimating the channel-impulse response are omitted, and the other configuration is the same as that in Embodiment 7. Moreover, regarding the operational procedure in the station 2, Step S210 of extracting the channel-impulse response from the flowchart represented in Fig. 12, Step S204 of estimating DUR2, Step S212 of estimating DUR1, and Step S206 of selecting the transmission parameter set are omitted.

Next, an operation is explained. The method of selecting the transmission parameter set in the modulation-condition selection unit is the same as that in Embodiments 1 - 3. The method of calculating DUR1 and DUR2 is the same as that in Embodiment 4 and Embodiment 6. The signal, called as the burst, transmitted from the station 1 propagates through the wireless transmission channel, and reaches the station 2. In this burst, the first pilot symbol and "Data" modulated by the modulation type (BPSK, QPSK, or 16QAM, etc.) that the station 1 has selected are included; moreover, the modulation type and the coding rate, etc. used here are also included in the burst as the first transmission parameter set.

In the station 2, the transmission-parameter extraction unit 9 extracts, from the signals (burst) received by the receiving antenna 13, the first transmission parameter set such as the modulation type used by the station 1, and communicates the extracted transmission parameter set to the demodulation unit 8 (Step S201). Using the transmission parameter set communicated from the transmission-parameter extraction unit 9, the demodulation unit 8 demodulates the information data series included in the burst received by the receiving antenna 13 (Step S202).

The channel-impulse-response estimation unit 10 estimates the channel-impulse response in which the cross-correlation value takes the peak at the points when the advanced wave reaches, and when at least one of the delayed waves reaches, similarly-to Embodiment 7, by calculating the cross-correlation between the received signal that the receiving antenna 13 has received and the third pilot symbol whose content is the same as that of the first pilot symbol that the station 2 has previously held, and, in order to announce this estimated channel-impulse response to the counter station 1, communicates first to the modulation unit 20 (Step S203).

The pilot symbol extraction unit 18 extracts from the signals received by the receiving antenna 13 the pilot symbol "Pilot" to be used by the station 1, and communicates to the modulation unit 20 (Step S211).

The modulation unit 20 modulates, using the third transmission parameter set that is predetermined and held by the station 2, the information data series including GI and "Data" (Step S207). The modulation unit 20 creates the burst by adding, to the modulated information-data-series, "channel-impulse-response estimation result" that is communicated from the channel-impulse-response estimation unit 10 and is to be used by the counter station 1, "pilot-symbol extraction result" that is communicated from the pilot-symbol extraction unit 18 and is to be used by the counter station 1, and the pilot symbol (the third pilot symbol) (Step S213), and then outputs the created burst from the antenna 14 to the wireless transmission channel (Step S209).

The burst outputted from the antenna does not include the third transmission parameter set used by the station 2. Accordingly, a high-speed operation of the burst transmission can be achieved. Moreover, this burst propagates through the wireless transmission channel, and then reaches the station 1.

In the station 1, the demodulation unit 8 extracts the modulated "Data" signal from the signals (burst) received by the receiving antenna 13, and then demodulates the extracted "Data signal", using a fourth transmission parameter set, previously held by the station, 1, whose content is the same as that of the third transmission parameter (Step S202).

Moreover, the channel-impulse-response extraction unit 19 extracts from the signals received by the receiving antenna 13 "channel-impulse-response estimation result" to be used by the station 2, and then communicates the extracted "channel-impulse-response estimation result" to the DUR2 estimation unit 15 (Step S210). The DUR2 estimation unit 15 calculates (estimates) DUR2 based on "channel-impulse-response estimation result", and then communicates the estimation result to the modulation-condition selection unit 11 (Step S204).

The DUR1 estimation unit 17 extracts from the signals received by the receiving antenna 13 "pilot-symbol extraction result" to be used by the station 2, calculates (estimates) DUR1 based on the result, and then communicates the estimation result to the modulation-condition selection unit 11 (Step S212).

The modulation-condition selection unit 11 determines, using DUR1 communicated from the DUR1 estimation unit 17 and DUR2 communicated from the DUR2 estimation unit 15, the parameter set (second transmission parameter set) of the modulation conditions (modulation type, coding rate, and information transmission speed, etc.) to be applied, and then communicates the determination result to the modulation unit 20 (Step S206).

The modulation unit 20 modulates, using the second transmission parameter set communicated from the modulation-condition selection unit 11, the information data series including GI and "Data" (Step S207). The modulation unit 20 further creates the burst by adding; to the modulated information data series, the second pilot symbol, previously held by the station 2, whose content is the same as that of the first pilot symbol, and the second transmission parameter set, as the first pilot symbol and the first transmission parameter set, respectively (Step S213), and then outputs from the antenna 14 to the wireless transmission channel (Step S209). Thus, the signals outputted from the antenna propagate through the wireless transmission channel and reach the station 2. The same operation as the above is performed again in the station 2. Then, the above operations are repeated between the station 1 and the station 2.

According to the Embodiment 8, in addition to the effect in Embodiment 7, because the third transmission parameter set is not transmitted from the station 2 to the station 1, a higher-speed operation compared to that in Embodiment 7 can be achieved.

Embodiment 9.

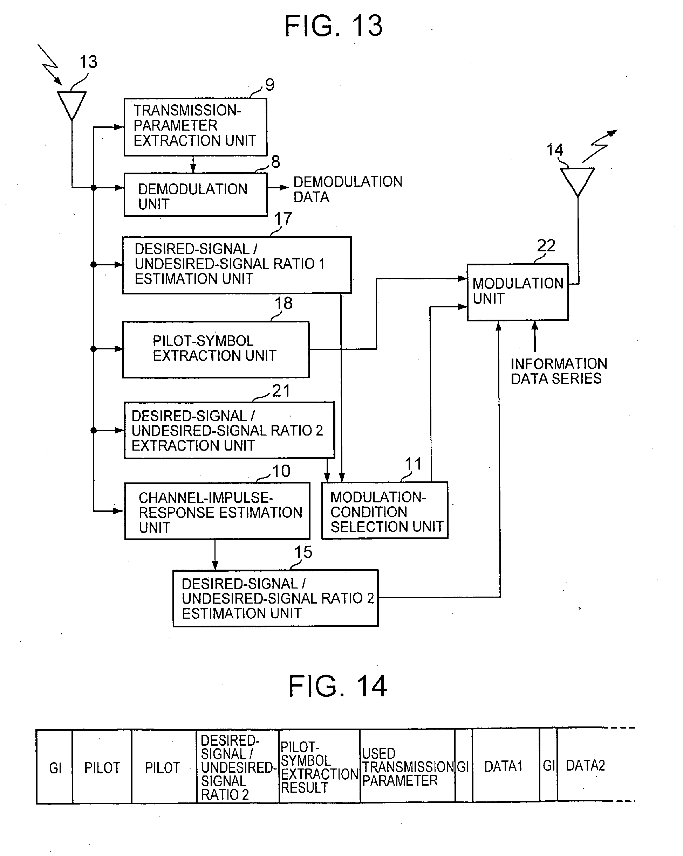

The configuration represented in Fig. 29 is also used in Embodiment 9; here, although it can be also applied to a case in which the configurations between the station 1 and the station 2 are different from each other, in order to simplify the explanation, the configurations between the station 1 and the station 2 are assumed to be identical to each other. Fig. 13 is a configuration view illustrating Embodiment 9 of a communication system according to the present invention, in which the station 1 and the station 2 have the same configuration as each other. In Fig. 13, the same symbols as those in Fig. 1 or Fig. 10 denote the same or equivalent members. The communication system includes a DUR2 extraction unit 21 for extracting DUR2 from the signals received by the receiving antenna 13 and for communicating to the modulation-condition selection unit 11, and a modulation unit 22 not only for modulating, using the transmission parameter set communicated from the modulation-condition selection unit 11, the information data series, but also for inserting into the transmission burst the DUR2 estimation result communicated from the DUR2 estimation unit, the extraction result by the pilot-symbol extraction unit, and the used transmission parameter set and the pilot symbol.

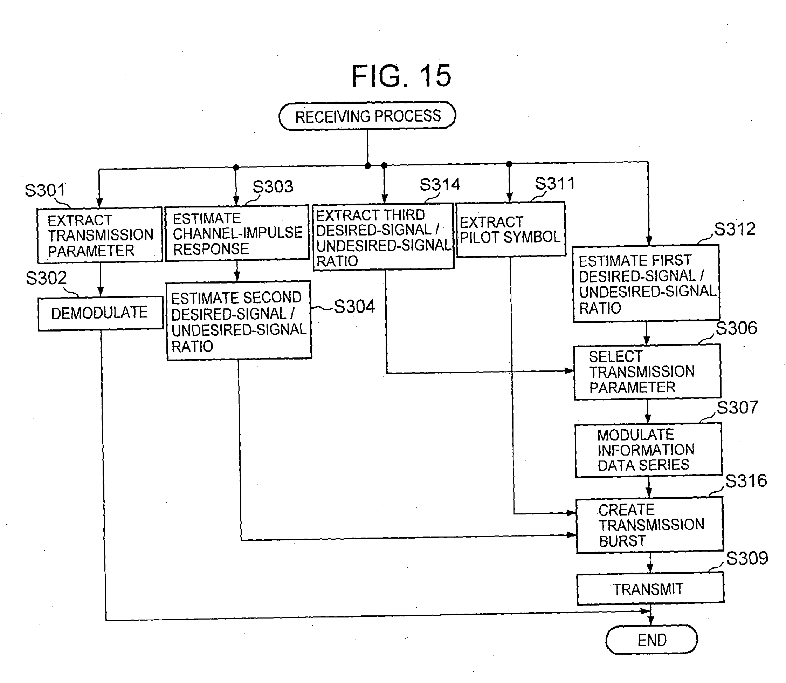

Fig. 14 is a view illustrating an example of a burst format that propagates through the broadband wireless transmission channel between the station 1 and the station 2 in Embodiment 9, which is the same as the burst format represented in Fig. 3, except for "DUR2" to be used by the counter station and "pilot-symbol-extraction result" being inserted between "Pilot" and "used transmission parameter set" in this figure. Moreover, Fig. 15 is a flowchart representing an operation of the station 1 and the station 2 in Embodiment 9.

Next, an operation of Embodiment 9 is explained referring to Fig. 13 Fig. 15. The method of selecting the transmission parameter set by the modulation-condition selection unit is similar to those in Embodiments 1 - 3. The methods of calculating DUR1 and DUR2 are similar to those in Embodiment 4 and Embodiment 6. The station1 transmits to the wireless transmission channel, as the burst illustrated in Fig. 14, the pilot symbol "Pilot", the transmission parameter set such as the modulation type determined by the serving station (station 1 in this case), "DUR2" to be used by the counter station, "pilot-symbol extraction result" to be used by the counter station, and the information data series that has been modulated by using the transmission parameter set such as the modulation type determined by the serving station; then, the burst propagates through the wireless transmission channel and reaches the antenna 13 of the station 2. In the station 2, the transmission parameter extraction unit 9 extracts, from the signals (burst) received by the receiving antenna 13, the transmission parameter set such as the modulation type used by the station 1, and then communicates the extracted transmission parameter set to the demodulation unit 8 (Step S301). The demodulation unit 8 demodulates, using the transmission parameter set communicated from the transmission-parameter extraction unit 9, the information data series included in the burst received by the receiving antenna 13 (Step S302).

The channel-impulse-response estimation unit 10 estimates the channel-impulse response, similarly to Embodiment 4, by calculating the cross-correlation between the received signal that the receiving antenna 13 has received and the pilot symbol that the station 2-has previously held, -and then communicates this estimated channel-impulse response to the DUR2 estimation unit 15 (Step S303).

Moreover, the DUR2 extraction unit 21 extracts, from the signals received by the receiving antenna, "DUR2" to be used by the station 2, and then communicates this extracted "DUR2" to the modulation-condition selection unit 11 (Step S314). The DUR2 estimation unit 15 calculates (estimates) DUR2, similar to Embodiment 4 and Embodiment 6, based on the channel-impulse response communicated from the channel-impulse-response estimation unit 10, and then communicates the estimation result to the modulation unit 22 (Step S304). The DUR1 estimation unit 17 extracts, from the signals received by the receiving antenna 13, "pilot-symbol extraction result" to be used by the station 2, and calculates (estimates) DUR1, similarly to Embodiment 4, based on the result; then, this estimation result is communicated to the modulation-condition selection unit 11 (Step S312). The pilot-symbol extraction unit 18 extracts, from the signals received by the receiving antenna 13, the pilot symbol "Pilot" to be used by the station 1, and then communicates to the modulation unit 22 (Step S311). The modulation-condition selection unit 11 determines, using DUR1 communicated from the DUR1 estimation unit 17 and DUR2 communicated from the DUR2 extraction unit 21, the parameter set (transmission parameter set) of the applied modulation conditions (modulation type, coding rate, and information transmission speed, etc.), and then communicates this determination result to the modulation unit 22 (Step S306).

The modulation unit 22 modulates, using the transmission parameter set communicated from the modulation-condition selection unit 11, the information data series including GI and "Data" (Step S307). The modulation unit 22 further creates the burst, by adding, to the modulated information data series, "DUR2" to be used by the counter station (the station 1 in this case) communicated from the DUR2 estimation unit 15, "pilot-symbol extraction result" to be used by the counter station communicated-from the pilot symbol extraction unit 18, the transmission parameter set such as the modulation type selected by the modulation-condition selection unit 11, and the pilot symbol (Step S316); then, the result is outputted from the antenna 14 to the wireless transmission channel (Step S309). Then, the signals outputted from the antenna propagate through the wireless transmission channel, and reach the station 1. Thus, the operation in the station1 is also performed similarly to that in the station 2.

According to Embodiment 9, an effect similar to that in Embodiment 4 can be obtained.

Embodiment 10.

Although an example of a case in which the station 1 and the station 2 have similar configurations to each other has been explained in Embodiment 9, a case in which the configurations between the station 1 and the station2 are different from each other (for example, a case in which the station 1 is a base station, while the station 2 is a mobile terminal) is explained here. In this embodiment, it is assumed that the first transmission parameter set used for the modulation, etc. in the station 1 adaptively varies corresponding to the quality of the wireless transmission channel, while the third parameter set used for the modulation, etc. in the station 2 is predetermined.

The station 1 transmits the signals having the first pilot symbol configured of a plurality of pilot symbols that are known information and are in a predetermined relationship to each other, having the first transmission parameter set including the modulation type, and having the information data series modulated by this first transmission parameter set. On the other hand, the station2 transmits the signals having the first pilot symbol, a third desired-signal / undesired-signal ratio (DUR2), the third pilot, symbol, and the information data series modulated by the third transmission parameter set that includes the predetermined modulation type.

Fig. 29 is also used in this Embodiment 10. Regarding the configuration of the station 1, the transmission-parameter extraction unit 9, the pilot-symbol extraction unit 18, the channel-impulse-response estimation unit 10, and the DUR2 estimation unit 15 are omitted from the configuration represented in Fig. 13, and the other configuration is the same as that in Embodiment 9. On the other hand, regarding the configuration of the station 2, the DUR1 estimation unit 17, the DUR2 extraction unit 21, and the modulation-condition selection unit 11 are omitted from the configuration represented in Fig. 13.

Moreover, regarding the burst format transmitted from the station 1 to the station 2 in Embodiment 10, "DUR2" and "pilot-symbol extraction result" are omitted from the burst format represented in Fig. 14. On the other hand, the burst format transmitted from the station 2 to the station 1, "used transmission parameter set" is omitted from the burst format represented in Fig. 14. Regarding the operational procedure of the station 1, Step S301 of extracting the transmission parameter set, Step S311 of extracting the pilot symbol, Step S303 of estimating the channel-impulse response, and Step S304 of estimating the second desired-signal / undesired-signal ratio are omitted from the flow chart illustrated in Fig. 15, and the other configuration is the same as that in Embodiment 9. On the other hand, regarding the operational procedure of the station 2, Step S314 of extracting the third desired-signal / undesired-signal ratio, Step S312 of estimating the first desired-signal / undesired-signal ratio, and Step S306 of selecting the transmission parameter set are omitted from the flow chart illustrated in Fig. 15.

Next, an operation is explained. The method of selecting the transmission parameter set in the modulation-condition selection unit is similar to that in Embodiments 1 - 3. The method of calculating DUR1 and DUR2 is similar to that in Embodiment 4 and Embodiment 6. The signals transmitted from the station 1, which are called as the burst, propagate through the wireless transmission channel, and- then reaches the station 2. In this burst, the first pilot symbol and "Data" modulated by the modulation type (BPSK, QPSK, or 16QAM, etc.) that the station 1 has selected are included, and the modulation type and the coding rate, etc. used here are also included in the burst as the first transmission parameter set.

In the station 2, the transmission-parameter extraction unit 9 extracts, from the signals (burst) received by the receiving antenna 13, the first transmission parameter set such as the modulation type used by the station 1, and then communicates the extracted transmission parameter set to the demodulation unit 8 (Step S301). The demodulation unit 8 demodulates, using the transmission parameter set communicated from the transmission-parameter extraction unit 9, the information data series included in the burst received by the receiving antenna 13 (Step S302).

The channel-impulse-response estimation unit 10 estimates the channel-impulse response in which the cross-correlation value takes the peak at the points when the advanced wave reaches, and when at least one of the delayed waves reaches, similarly to Embodiment 9, by calculating the cross-correlation between the received signal that the receiving antenna 13 has received and the third pilot symbol whose content is the same as that of the first pilot symbol previously held by the station 2; then, this estimated channel-impulse response is communicated to the DUR2 estimation unit 15 (Step S303). The DUR2 estimation unit 15 calculates (estimates) DUR2 based on this channel-impulse-response estimation result, and then communicates the estimation result to the modulation unit 22 (Step S304).

The pilot-symbol extraction unit 18 extracts, from the signals received by the receiving antenna 13, the pilot symbol "Pilot" to be used by the station 1, and then communicates to the modulation unit 22 (Step S311).

The modulation unit 22 modulates, using the third transmission parameter set that has been predetermined and are held by the station 2, the information data series including GI and "Data" (Step S307). The modulation unit 22 further creates the burst by adding, to the modulated information data series, DUR2" that is communicated from the DUR2 estimation unit 15 and is to be used by the counter station 1, "pilot-symbol extraction result" that is communicated from the pilot-symbol extraction unit 18 and is to be used by the counter station 1, and the second pilot symbol, previously held by the station 2, whose content is the same as that of the first pilot symbol (Step S316); then, the created burst is outputted from the antenna 14 to the wireless transmission channel (Step S309).

The third transmission parameter set used by the station 2 is not included in the burst outputted from this antenna. Accordingly, a high-speed operation of the burst transmission can be achieved. Then, this burst propagates through the wireless transmission channel and reaches the station 1.

In the station 1, the demodulation unit 8 extracts the modulated "Data" signals from the signals (burst) received by the receiving antenna 13, and then demodulates the extracted "Data" signals, using the fourth transmission parameter set, previously held by the station 1, whose content is the same as that of the third transmission parameter set (Step S302).

Moreover, the DUR2 extraction unit 21 extracts, from the signals received by the receiving antenna 13, "DUR2" to be used by the station 2, and then communicates the extracted "DUR2" to the modulation-condition selection unit 11 (Step S314).

The DUR1 estimation unit 17 extracts, from the signals received by the receiving antenna 13, "pilot-symbol extraction result" to be used by the station 2, and calculates (estimates) DUR1 based on the result; then, the estimation result is communicated to the modulation-condition selection unit 11 (Step S312).

The modulation-condition selection unit 11 determines,-using DUR1 communicated from the DUR1 estimation unit 17 and DUR2 communicated from the DUR2 extraction unit 21, the parameter set (second transmission parameter set) of the applied modulation conditions (modulation type, coding rate, and information transmission speed, etc.), then, this determination result is communicated to the modulation unit 22 (Step S306).

The modulation unit 22 modulates, using the second transmission parameter set communicated from the modulation-condition selection unit 11, the information data series including GI and "Data" (Step S307). The modulation unit 22 further creates the burst by adding, to the modulated information data series, the fourth pilot symbol, previously held by the station 2, whose content is the same as that of the first pilot symbol, and the second transmission parameter set, as the first pilot symbol and the first transmission parameter set, respectively (Step S316), and outputs from the antenna 14 to the wireless transmission channel (Step S309). Then, the signals outputted from the antenna propagate through the wireless transmission channel, and reach the station 2. Moreover, the same operation as the above is performed again in the station 2. The above operation is subsequently repeated between the station 1 and the station 2.

According to this Embodiment 10, in addition to the effect represented in Embodiment 9, because the third transmission parameter set is not transmitted from the station 2 to the station 1; a more high-speed operation of the burst transmission than that in Embodiment 9 can be achieved.

Embodiment 11.

The configuration represented in Fig. 29 is also used in Embodiment 11; here, although it can be also applied to a case in which the configurations between the station 1 and the station 2 are different from each other, in order to simplify the explanation, the configurations-between the station 1 and the station 2 are assumed to be identical to each other. Fig. 16 is a configuration view illustrating Embodiment 11 of a communication system according to the present invention, in which the station 1 and the station 2 have the same configuration as each other. In Fig. 16, the same symbols as those in Fig. 1, Fig. 10, and Fig. 13 denote the same or equivalent members. The communication system includes a DUR1 extraction unit 23 for extracting DUR1 from the signals received by the receiving antenna 13 and for communicating to the modulation-condition selection unit 11, and a modulation unit 24 not only for modulating, using the transmission parameter set communicated from the modulation-condition selection unit 11, the information data series, but also for inserting, into the transmission burst, the channel-impulse-response estimation result communicated from the channel-impulse-response estimation unit 10, the DUR1 estimation result communicated from the DUR1 estimation unit 16, the used transmission parameter set, and the pilot symbol.

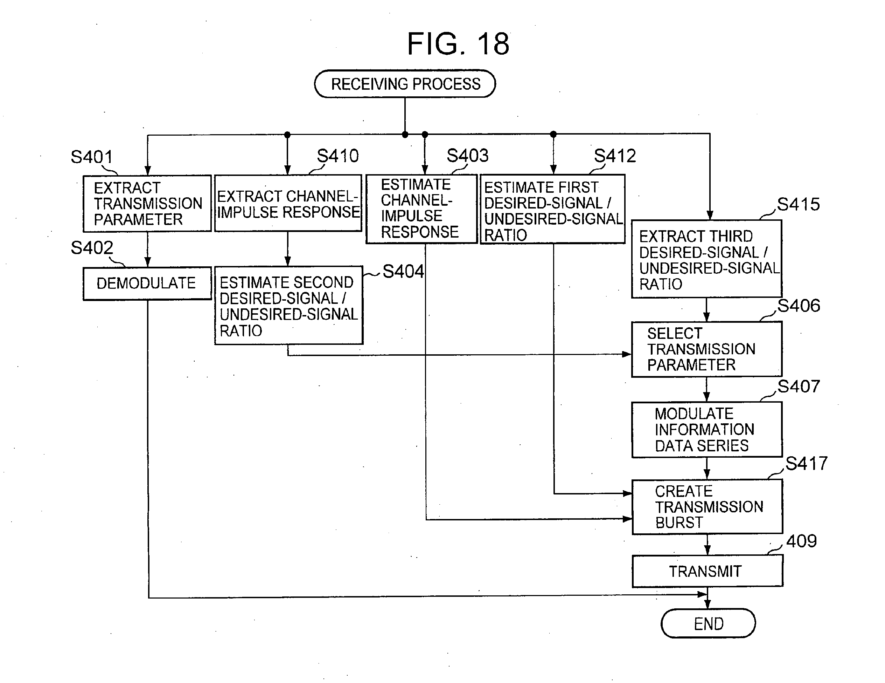

Fig. 17 is a view illustrating an example of a burst format propagating through the broadband wireless transmission channel between the station 1 and the station 2 in Embodiment 11; whereas, the burst format in this figure is the same as that in Fig. 3 except for "DUR1" to be used by the counter station and "channel-impulse-response estimation result" being inserted between "Pilot" and "used transmission parameter set". Moreover, Fig. 18 is a flowchart illustrating an operation of the station 1 and the station 2 in Embodiment 11.

Next, an operation of Embodiment 11 is explained referring to Fig 16 Fig. 18. The method of selecting the transmission parameter set in the modulation-condition selection unit is the same as that in Embodiments 1 -3. The method of calculating DUR1 and DUR2 is the same as that in Embodiment 4 and Embodiment 6. The station 1 transmits to the wireless transmission channel, as the burst represented in Fig. 17, the pilot symbol "Pilot", the transmission parameter set such as the modulation type determined by the serving station (station 1 in this case), "DUR1" to be used by the counter station, "channel-impulse-response estimation result" to be used by the counter station, and the information data series that has been modulated using the transmission parameter set such as the modulation type determined by the serving station; then, the burst propagates through the wireless transmission channel and reaches the antenna 13 of the station 2. In the station 2, the transmission-parameter extraction unit 9 extracts, from the signals (burst) received by the receiving antenna 13; the transmission parameter set such as the modulation type used by the station 1; then, the extracted transmission parameter set is communicated to the demodulation unit 8 (Step S401). The demodulation unit 8 demodulates, using the transmission parameter set communicated from the transmission parameter extraction unit 9, the information data series included in the burst received by the receiving antenna 13 (Step S402).

The channel-impulse-response estimation unit 10 estimates the channel-impulse response by calculating, similarly to Embodiment 4, the cross-correlation between the received signals received by the receiving antenna 13 and the pilot symbol previously held by the station 2; then, in order to announce to the counter station this estimated channel-impulse response, the response is first communicated to modulation unit 24 (Step S403).

Moreover, the channel-impulse-response extraction unit 19 extracts "channel-impulse-response estimation result" to be used by the station 2 from the signals received by the receiving antenna 13, and then communicates the extracted "channel-impulse-response estimation result" to DUR2 estimation unit 15 (Step 410). The DUR2 estimation unit 15 calculates (estimates), similarly to Embodiment 4 and Embodiment 6, DUR2 based on this "channel-impulse-response estimation result", and then communicates the estimation result to the modulation-condition selection unit 11 (Step S404). The DUR1 estimation unit 16 estimates, similarly to Embodiment 4, DUR1 based on a plurality of pilot symbols "Pilot" included in the signals received by the receiving antenna 13, and then communicates to the modulation unit 24 (Step S412). The DUR1 extraction unit 23 extracts, from the signals received by the receiving antenna 13, "DUR1" to be used by the station 1, and then communicates to the modulation-condition selection unit 11 (Step S415). The modulation-condition selection unit 11 determines, using DUR1 communicated from the DUR1 extraction unit 23 and DUR2 communicated from the DUR2 estimation unit 15, the parameter set (transmission parameter set) of the applied modulation conditions (modulation type; coding rate, and information transmission speed, etc.), and then communicates the determination result to the modulation unit 24 (Step S406).

The modulation unit 24 modulates, using the transmission parameter set communicated from the modulation-condition selection unit 11, the information data series including GI and "Data" (Step S407). The modulation unit 24 further creates the burst, by adding, to the modulated information data series, "channel-impulse-response estimation result" that is communicated from the channel-impulse-response estimation unit10 and is to be used by the counter station (station 1 in this case), "DUR1" that is communicated from the DUR1 estimation unit 16 and is to be used by the counter station, the transmission parameter set such as the modulation type selected by the modulation-condition selection unit 11, and the pilot symbol (Step S417); then, the created burst is outputted from the antenna 14 to the wireless transmission channel (Step S409). Then, the signals outputted from the antenna 14 propagate through the wireless transmission channel, and reach the station 1. Moreover, a similar operation to that in the station 2 is also performed in the station 1.

According to this Embodiment 11, a similar effect to that in Embodiment 4 can be achieved.

Embodiment 12.

Although an example of a case in which the station 1 and the station 2 have similar configurations to each other has been explained, a case in which the configurations between the station 1 and the station2 are different from each other (for example, a case in which the station 1 is a base station, while the station 2 is a mobile terminal) is explained here. In this embodiment, it is assumed that the first transmission parameter set used for the modulation, etc. in the station 1 adaptively varies corresponding to the quality of the wireless transmission channel, while the third parameter set used for the modulation, etc. in the station 2 is predetermined.

The station 1 transmits the signals having the first pilot symbol configured of a plurality of pilot symbols that are known information and are in a predetermined relationship to each other, having the first transmission parameter set including the modulation type, and having the information data series modulated by this first transmission parameter set. On the other hand, the station2 transmits; the signals having the first pilot symbol, the DUR1 estimation result, the channel-impulse-response estimation result, and the information, data series modulated by the third transmission parameter set that includes the predetermined modulation type.

Fig. 29 is also used in this Embodiment 12. Regarding the configuration of the station 1, the transmission-parameter extraction unit 9, the DUR1 estimation unit 16, and the channel-impulse-response estimation unit 10 are omitted from the configuration represented in Fig. 16, and the other configuration is the same as that in Embodiment 11. On the other hand, regarding the configuration of the station 2, the channel-impulse-response extraction unit 19, the DUR1 extraction unit 23, the DUR2 estimation unit 15, and the modulation-condition selection unit 11 are omitted from the configuration represented in Fig. 16.

Moreover, regarding the burst format transmitted from the station 1 to the station 2 in Embodiment 12, "transmission channel response estimation result" and "DUR1" are omitted from the burst format represented in Fig. 17. On the other hand, in the burst format transmitted from the station 2 to the station 1, "used transmission parameter set" is omitted from the burst format represented in Fig. 17. Regarding the operational procedure of the station 1, Step S401 of extracting the transmission parameter set, Step S412 of estimating the first desired-signal/undesired-signal ratio, and Step S403 of estimating the channel-impulse response are omitted from the flow chart illustrated in Fig. 18, and the other configuration is the same as that in Embodiment 11. On the other hand, regarding the operational procedure of the station 2, Step S410 of extracting the channel-impulse response, Step S404 of estimating the second desired-signal / undesired-signal ratio, Step S415 of extracting the third desired-signal / undesired-signal ratio, and Step S406 of selecting the transmission parameter set are omitted from the flow chart illustrated in Fig. 18.

Next, an operation is explained. The method of selecting the transmission parameter set in the modulation-condition selection unit is similar to that in Embodiments 1 - 3. The method of calculating DUR1 and DUR2 is similar to that in Embodiment 4 and Embodiment 6. The signals transmitted from the station 1, which are called as the burst, propagate through the wireless transmission channel; and then reaches the station 2. In this burst, the first pilot symbol and "Data" modulated by the modulation type (BPSK, QPSK, or 16QAM, etc.) that the station 1 has selected are included, and the modulation type and the coding rate, etc. used here are also included in the burst as the first transmission parameter set.

In the station 2, the transmission-parameter extraction unit 9 extracts, from the signals (burst) received by the receiving antenna 13, the first transmission parameter set such as the modulation type used by the station 1, and then communicates the extracted transmission parameter set to the demodulation unit 8 (Step S401). The demodulation unit 8 demodulates, using the transmission parameter set communicated from the transmission-parameter extraction unit 9, the information data series included in the burst received by the receiving antenna 13 (Step S402).

The channel-impulse-response estimation unit 10 estimates the channel-impulse response in which the cross-correlation value takes the peak at the points when the advanced wave reaches, and when at least one of the delayed waves reaches, similarly to Embodiment 11, by calculating the cross-correlation between the received signal that the receiving antenna 13 has received and the third pilot symbol whose content is the same as that of the first pilot symbol previously held by the station 2; then, in order to announce this estimated channel-impulse response to the counter station 1, the response is first communicated to the modulation unit 24 (Step S403).

The DUR1 estimation unit 16 estimates DUR1, similarly to Embodiment 4, based on a plurality of pilot symbols "Pilot" included in the signals received by the receiving antenna 13, and then communicates to the modulation unit 24 (Step 5412).

The modulation unit 24 modulates, using the third transmission parameter set that has been predetermined and are held by the station 2, the information data series including GI and "Data" (Step S407). The modulation unit 24 further creates the burst by adding, to the modulated information data series, "channel-impulse-response estimation result" that is communicated from the channel-impulse-response estimation unit10 and is to be used by the counter station 1, "DUR1" that is communicated from the DUR1 estimation unit 16 and is to be used by the counter station 1, and the pilot symbol (Step S417); then, the created burst is outputted from the antenna 14 to the wireless transmission channel (Step S409).

The third transmission parameter set used by the station 2 is not included in the burst outputted from this antenna. Accordingly, a high-speed operation of the burst transmission can be achieved. Then, this burst propagates through the wireless transmission channel and reaches the station 1.

In the station 1, the demodulation unit 8 extracts the modulated "Data" signals from the signals (burst) received by the receiving antenna 13, and then demodulates the extracted "Data" signals, using the fourth transmission parameter set, previously held by the station 1, whose content is the same as that of the third transmission parameter set (Step S402).

Moreover, the channel-impulse-response extraction unit 19 extracts, from the signals received by the receiving antenna 13, "channel-impulse-response estimation result" to be used by the station 2, and then communicates this extracted "channel-impulse response estimation result" to the DUR2 estimation unit 15 (Step S410). The DUR2 estimation unit 15 calculates (estimates) DUR2 based on this "channel-impulse-response estimation result", and then communicates the estimation result to the modulation-condition selection unit 11 (Step S404).

The DUR1 extraction unit 23 extracts, from the signals received by the receiving antenna 13, "DUR1" to be used by the station 2, and then communicates this "DUR1" to the modulation-condition selection unit 11 (Step S415).

The modulation condition selection unit 11 determines, using DUR1 communicated from the DUR1 extraction unit 23 and DUR2 communicated from the DUR2 estimation unit 15, the parameter set (second transmission parameter set) of the applied modulation conditions (modulation type, coding rate, and information transmission speed, etc.); then, this determination result is communicated to the modulation unit 24 (Step 5406).

The modulation unit 24 modulates, using the second transmission parameter set communicated from the modulation-condition selection unit 11, the information data series including GI and "Data" (Step S407). The modulation unit 24 further creates the burst by adding, to the modulated information data series, the second pilot symbol, previously held by the station 2, whose content is the same as that of the first pilot symbol; and the second transmission parameter set, as the first pilot symbol and the first transmission parameter set, respectively (Step S417), and outputs from the antenna 14 to the wireless transmission channel (Step S409). Then, the signals outputted from the antenna propagate through the wireless transmission channel, and reach the station 2. Moreover, the same operation as the above is performed again in the station 2. The above operation is subsequently repeated between the station 1 and the station 2.

According to this Embodiment 12, in addition to the effect represented in Embodiment 11, because the third transmission parameter set is not transmitted from the station 2 to the station 1, a more high-speed operation of the burst transmission than that in Embodiment 11 can be achieved.

Embodiment 13.

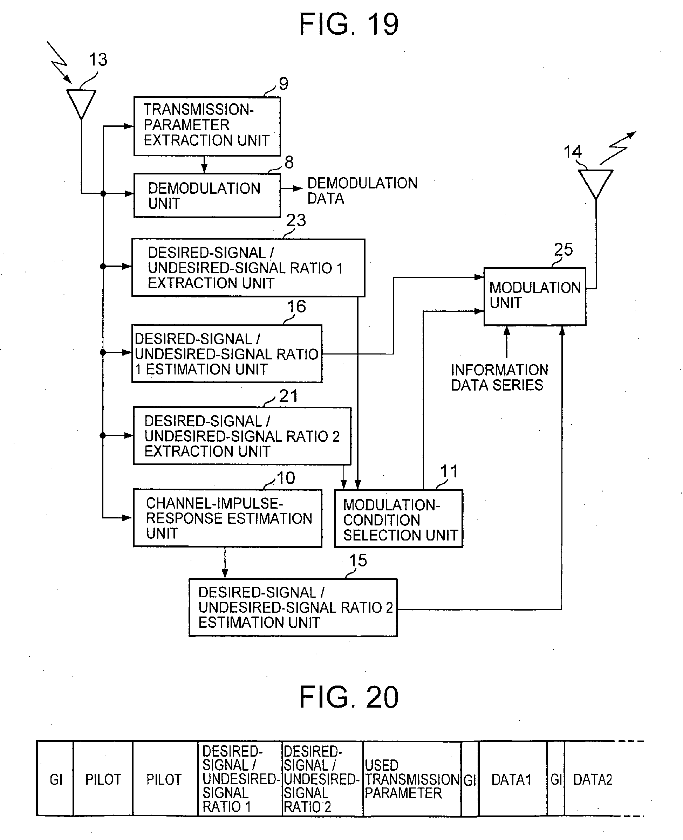

The configuration represented in Fig. 29 is also used in Embodiment 13; here, although it can be also applied to a case in which .the configurations between the station 1 and the station 2 are different from each other, in order to simplify the explanation, the configurations between the station 1 and the station 2 are assumed to be identical to each other. Fig. 19 is a configuration view illustrating Embodiment 13 of a communication system according to the present invention, in which the station 1 and the station 2 have the same configuration as each other. In Fig. 19, the same symbols as those in Fig. 1, Fig. 10, Fig. 13, and Fig. 16 denote the same or equivalent members. The communication system includes a modulation unit 25 not only for modulating, using the transmission parameter set communicated from the modulation-condition selection unit 11, the information data series, but also for inserting into the transmission burst the DUR1 estimation result communicated from the DUR1 estimation unit 16, the DUR2 estimation result communicated from the DUR2 estimation unit 15, the used transmission parameter set, and the pilot symbol.

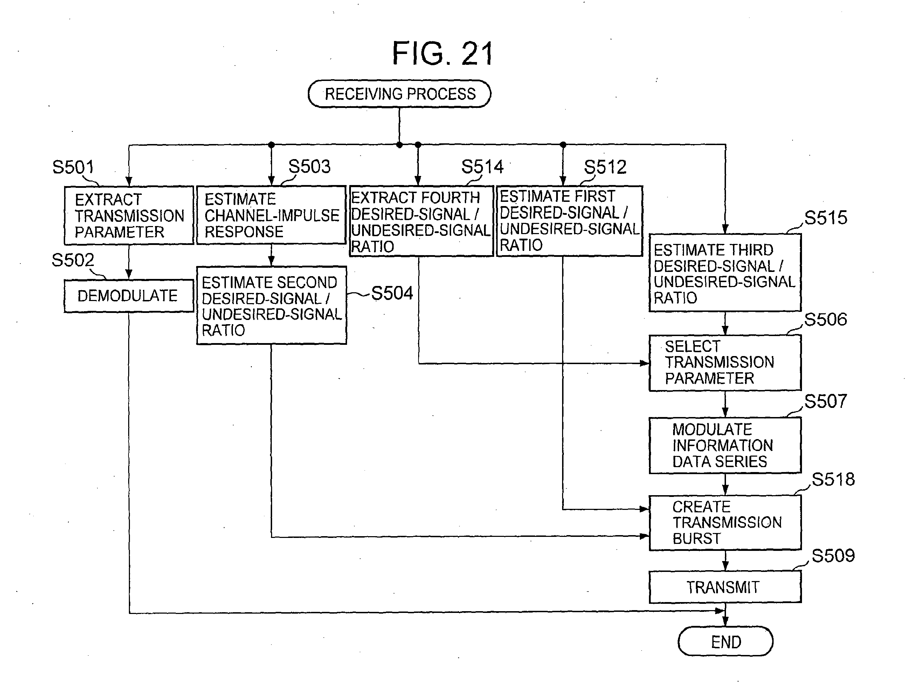

Fig. 20 is a view illustrating an example of a burst format propagating through the broadband wireless transmission channel between the station 1 and the station 2 in Embodiment 13; whereas, the burst format in this figure is the same as that in Fig. 3 except for "DUR1" and "DUR2" to be used by the counter station being inserted between "Pilot" and "used transmission parameter set". Moreover, Fig. 21 is a flowchart illustrating an operation of the station 1 and the station 2 in Embodiment 13.

Next, an operation of Embodiment 13 is explained referring to Fig 19 Fig. 21. The method of selecting the transmission parameter set in the modulation-condition selection unit is the same as that in Embodiments 1 -3. The method of calculating DUR1 and DUR2 is the same as that in Embodiment 4 and Embodiment 6. The station 1 transmits to the wireless transmission channel, as the burst represented in Fig. 20, the pilot symbol "Pilot", the transmission parameter set such as the modulation type determined by the serving station (station 1 in this case), "DUR1" to be used by the counter station, "DUR2" to be used by the counter station, and the information data series that has been modulated using the transmission parameter set such as the modulation type determined by the serving station; then, the burst propagates through the wireless transmission channel and reaches the antenna 13 of the station 2. In the station 2, the transmission-parameter extraction unit 9 extracts, from the signals (burst) received by the receiving antenna 13, the transmission parameter set such as the modulation type used by the station 1; then, the extracted transmission parameter set is communicated to the demodulation unit 8 (Step S501). The demodulation unit 8 demodulates, using the transmission parameter set communicated from the transmission-parameter extraction unit 9, the information data series included in the burst received by the receiving antenna 13 (Step S502).

The channel-impulse-response estimation unit 10 estimates the channel-impulse response by calculating, similarly to Embodiment 4, the cross-correlation between the received signals received by the receiving antenna 13 and the pilot symbol previously held by the station 2, and then communicates to the DUR2 estimation unit 15 (Step, S503). The DUR2 estimation unit 15 calculates (estimates), similarly, to Embodiment 4 and Embodiment 6, DUR2 based on the channel-impulse-response estimation result communicated from the channel-impulse-response estimation unit 10, and then communicates the estimation result to the modulation unit 25 (Step S504). The DUR2 extraction unit 21 extracts, from the signals received by the receiving antenna 13, "DUR2" to be used by the station 2; then, this extracted "DUR2"is communicated to the modulation-condition selection unit 11 (Step S514). The DUR1 estimation unit 16 estimates, similarly to Embodiment 4, DUR1 based on a plurality of pilot symbols "Pilot" included in the signals received by the receiving antenna 13, and then communicates to the modulation unit 25 (Step S512). The DUR1 extraction unit 23 extracts, from the signals received by the receiving antenna 13, "DUR1" to be used by the station 1, and then communicates to the modulation-condition selection unit 11 (Step S515). The modulation-condition selection unit 11 determines, using DUR1 communicated from the DUR1 extraction unit 23 and DUR2 communicated from the DUR2 extraction unit 21, the parameter set (transmission parameter set) of the applied modulation conditions (modulation type, coding rate, and information transmission speed, etc.), and then communicates the determination result to the modulation unit 25 (Step S506).

The modulation unit 25 modulates, using the transmission parameter set communicated from the modulation-condition selection unit 11, the information data series including GI and "Data" (Step 5507). The modulation unit 25 further creates the burst, by adding, to the modulated information data Series, "DUR1" that is communicated from the DUR1 estimation unit 16 and is to be used by the counter station, "DUR2" that is communicated from the DUR2 estimation unit 15 and is to be used by the counter station (station 1 in this case), the transmission parameter set such as the modulation type selected by the modulation-condition selection unit 11, and the pilot symbol (Step S518); then, the created burst is outputted from the antenna 14 to the wireless transmission channel (Step S509). Then, the signals outputted from the antenna propagate through the wireless transmission channel, and reach the station 1. Moreover, a similar operation to that in the station 2 is also performed in the station 1.

According to this Embodiment 13, a similar effect to that in Embodiment 4 can be achieved.

Embodiment 14.

Although an example of a case in which the station 1 and the station 2 have similar configurations to each other has been explained in Embodiment 13, a case in which the configurations between the station 1 and the station2 are different from each other (for example, a case in which the station 1 is a base station, while the station 2 is a mobile terminal) is explained here. In this embodiment, it is assumed that the first transmission parameter set used for the modulation, etc. in the station 1 adaptively varies corresponding to the quality of the wireless transmission channel, while the third parameter set used for the modulation; etc. in the station 2 is predetermined.

The station 1 transmits the signals having the first pilot symbol configured of a plurality of pilot symbols that are known information and are in a predetermined relationship to each other, having the first transmission parameter set including the modulation type, and having the information data series modulated by this first transmission parameter set. On the other hand, the station2 transmits the signals having the first pilot symbol, DUR1, DUR2, and the information data series modulated by the third transmission parameter set that includes the predetermined modulation type.

Fig. 29 is also used in this Embodiment 14. Regarding the configuration of the station 1, the transmission-parameter extraction unit 9, the DUR1 estimation unit 16, the channel-impulse-response estimation unit 10, and the DUR2 estimation unit 15 are omitted from the configuration represented in Fig. 19, and the other configuration is the same as that in Embodiment 13. On the other hand, regarding the configuration of the station 2, the DUR1 extraction unit 23, the DUR2 extraction unit 21, and the modulation-condition selection unit 11 are omitted from the configuration represented in Fig. 19.

Moreover, regarding the burst format transmitted from the station 1 to the station 2 in Embodiment 14, "DUR1" and "DUR2" are omitted from the burst format represented in Fig. 20. In the burst format transmitted from the station 2 to the station 1, "used transmission parameter set" are omitted from the burst format represented in Fig. 20. Regarding the operational procedure of the station 1, Step S501 of extracting the transmission parameter set, Step S512 of estimating the first desired-signal / undesired-signal ratio (DUR1), Step S503 of estimating the channel-impulse response, and Step S504 of estimating the second desired-signal / undesired-signal ratio (DUR2) are omitted from the flow chart illustrated in Fig. 21, and the other configuration is the same as that in Embodiment 13. On the other hand, regarding the operational procedure of the station 2, Step S515 of extracting the third desired-signal / undesired-signal ratio (DUR1), Step S514 of extracting the fourth desired-signal / undesired-signal ratio (DUR2), and Step S506 of selecting the transmission parameter set are omitted from the flow chart illustrated in Fig. 21.

Next, an operation is explained. The method of selecting the transmission parameter set in the modulation-condition selection unit is similar to that in Embodiments 1 - 3. The method of calculating DUR1 and DUR2 is similar to that in Embodiment 4 and Embodiment 6. The signals transmitted from the station 1, which are called as the burst, propagate through the wireless transmission channel, and then reach the station 2. In this burst, the first pilot symbol and "Data" modulated by the modulation type (BPSK, QPSK, or 16QAM, etc.) that the station 1 has selected are included, and the modulation type and the coding rate, etc. used here are also included in the burst as the first transmission parameter set.

In the station 2, the transmission-parameter extraction unit 9 extracts; from the signals (burst) received by the receiving antenna 13, the first transmission parameter set such as the modulation type used by the station 1, and then communicates the extracted transmission parameter set to the demodulation unit 8 (Step S501). The demodulation unit 8 demodulates, using the transmission parameter set communicated from the transmission-parameter extraction unit 9, the information data series included in the burst received by the receiving antenna 13 (Step S502).

The channel-impulse-response estimation unit 10 estimates the channel-impulse response in which the cross-correlation value takes the peak at the points when the advanced wave reaches, and when at least one of the delayed waves reaches, similarly to Embodiment 13, by calculating the cross-correlation between the received signal that the receiving antenna 13 has received and the third pilot symbol whose content is the same as that of the first pilot symbol previously held by the station 2; then, the estimated channel-impulse response is communicated to the DUR2 estimation unit 15 (Step S503). The DUR2 estimation unit 15 calculates (estimates) the second desired-signal / undesired-signal ratio (DUR2) based on the channel-impulse-response estimation result; then, the estimation result is communicated to the modulation unit 25 (Step S504).

The DUR1 estimation unit 16 estimates the first desired-signal / undesired-signal ratio (DUR1), similarly to Embodiment 4, based on a plurality of pilot symbols "Pilot" included in the signals received by the receiving antenna 13, and then communicates to the modulation unit 25 (Step S512).

The modulation unit 25 modulates, using the third transmission parameter set that has been predetermined and are held by the station 2, the information data series including GI and "Data" (Step S507). The modulation unit 25 further creates the burst by adding, to the modulated information data series, "DUR2" that is communicated from the DUR2 estimation unit 15 and is to be used by the counter station 1, "DUR1" that is communicated from the DUR1 estimation unit 16. and is to be used by the counter station 1, and the pilot symbol (Step S518), and then outputs from the antenna 14 to the wireless transmission channel (Step S509).

The third transmission parameter set used by the station 2 is not included in the burst outputted from this antenna. Accordingly, a high-speed operation of the burst transmission can be achieved. Then, this burst propagates through the wireless transmission channel and reaches the station 1.

In the station 1, the demodulation unit 8 extracts the modulated "Data" signals from the signals (burst) received by the receiving antenna 13, and then demodulates the extracted "Data" signals, using the fourth transmission parameter set, previously held by the station 1, whose content is the same as that of the third transmission parameter set (Step S502).

The DUR1 extraction unit 23 extracts, from the signals received by the receiving antenna 13, the third desired-signal / undesired-signal ratio ("DUR1") to be used by the station 1, and then communicates this extracted "DUR1" to the modulation-condition selection unit 11 (Step S512).

Moreover, the DUR2 extraction unit 21 extracts, from the signals received by the receiving antenna 13, the fourth desired-signal / undesired-signal ratio ("DUR2") to be used by the station 1, and then communicates this extracted "DUR2" to the modulation-condition selection unit 11 (Step S514).

The modulation-condition selection unit 11 determines, using DUR1 communicated from the DUR1 extraction unit 23 and DUR2 communicated from the DUR2 extraction unit 21, the parameter set (second transmission parameter set) of the applied modulation conditions (modulation type; coding rate, and information transmission speed, etc.); then, this determination result is communicated to the modulation unit 25 (Step S506).

The modulation unit 25 modulates, using the second transmission parameter set communicated from the modulation-condition selection unit 11, the information data series including GI and "Data" (Step S507). The modulation unit 25 further creates the burst by adding, to the modulated information data series, the second pilot symbol, previously held by the station 2, whose content is the same as that of the first pilot symbol, and the second transmission parameter set, as the first pilot symbol and the first transmission parameter set, respectively (Step S213), and outputs from the antenna 14 to the wireless transmission channel (Step S509). Then, the signals outputted from the antenna propagate through the wireless transmission channel, and reach the station 2. Moreover, the same operation as the above is performed again in the station 2. The above operation is subsequently repeated between the station 1 and the station 2.

According to this Embodiment 14, in addition to the effect represented in Embodiment 13, because the third transmission parameter set is not transmitted from the station 2 to the station 1, a more high-speed operation of the burst transmission than that in Embodiment 13 can be achieved.

Embodiment 15.

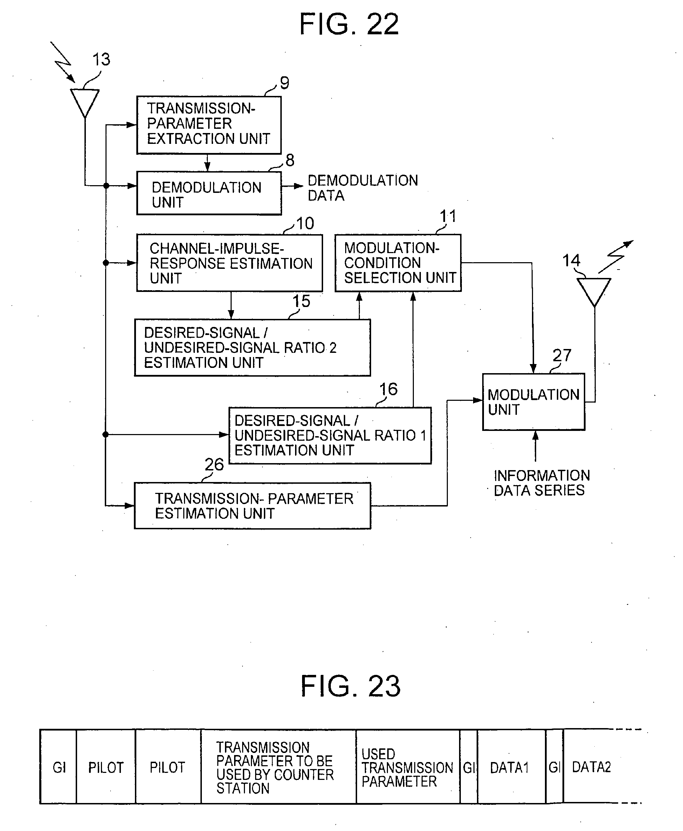

The configuration represented in Fig. 29 is also used in Embodiment 15; here, although it can be also applied to a case in which the configurations between the station 1 and the station 2 are different from each other, in order to simplify the explanation, the configurations between the station 1 and the station 2 are assumed to be identical to each other. Fig. 22 is a configuration view illustrating Embodiment 15 of a communication system according to the present invention, in which the station 1 and the station 2 have the same configuration as each other. In Fig. 22, the same symbols as those in Fig. 1, Fig. 10, Fig. 13, Fig. 16, and Fig. 19 denote the same or equivalent members. The communication system includes a transmission-parameter estimation unit 26 for extracting, from the signals received by the receiving antenna 13, the transmission parameter set such as the modulation type communicated from the other side, and for communicating to a modulation unit 27, and the modulation unit 27 not only for modulating, using the transmission parameter set communicated from the transmission-parameter estimation unit 26, the information data series, but also for inserting into the transmission burst the transmission parameter set to be used by the counter station, the used transmission parameter set, and the pilot symbol.

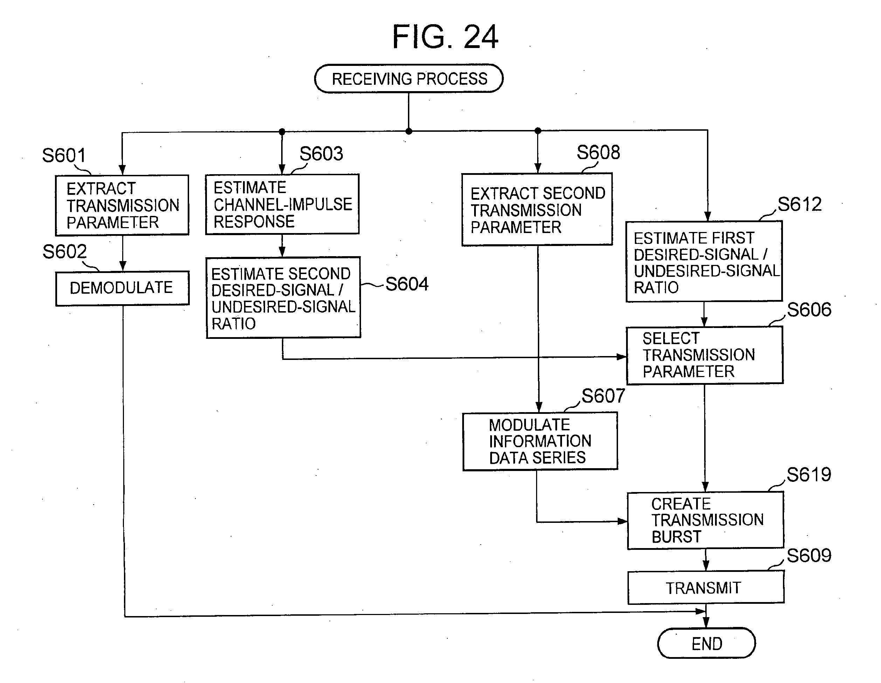

Fig. 23 is a view illustrating an example of a burst format propagating through the broadband wireless transmission channel between the station 1 and the station 2 in Embodiment 15; whereas, the burst format in this figure is the same as that in Fig. 3 except for "transmission parameter set to be used by the counter station" being inserted between "Pilot" and "used transmission parameter set". Moreover, Fig. 24 is a flowchart illustrating an operation of the station 1 and the station 2 in Embodiment 15.

Next, an operation of Embodiment 15 is explained referring to Fig 22 - Fig. 24. The method of selecting the transmission parameter set in the modulation-condition selection unit is the same as that in Embodiments 1 -3. The method of calculating DUR1 and DUR2 is the same as that in Embodiment 4 and Embodiment 6. The station 1 transmits to the wireless transmission channel, as the burst represented in Fig. 23, the transmission parameter set such as the modulation type determined by the serving station, the predetermined pilot symbol, the information data series that has been modulated using the transmission parameter set determined by the serving station, and "transmission parameter set to be used by the counter station (station 2 in this case)"; then, the burst propagates through the wireless transmission channel and reaches the antenna 13 of the station 2. In the station 2, the transmission-parameter extraction unit 9 extracts, from the signals (burst) received by the receiving antenna 13, the transmission parameter set such as the modulation type used by the station 1, and then communicates to the demodulation unit 8 (Step S601). The demodulation unit 8 demodulates, using the transmission parameter set communicated from the transmission-parameter extraction unit 9, the information data series included in the burst received by the receiving antenna 13 (Step S602).

The channel-impulse-response estimation unit 10 estimates the channel-impulse response by calculating, similarly to Embodiment 4, the cross-correlation between the signal waveform received by the receiving antenna 13 and the pilot symbol previously held by the station 2; then the estimation result is communicated to the DUR2 estimation unit 15 (Step S603). The DUR2 estimation unit 15 calculates (estimates), similarly to Embodiment 4 and Embodiment 6, DUR2 based on the channel-impulse-response estimation result; then, this estimated DUR2 is communicated to the modulation-condition selection unit 11 (Step S604). The DUR1 estimation unit 16 estimates DUR1, similarly to Embodiment 4, based on a plurality of pilot symbols "Pilot" included in the signals received by the receiving antenna 13; then, this estimated DUR1 is communicated to the modulation-condition selection unit 11 (Step S612). The modulation-condition selection unit 11 determines, using DUR1 communicated from the DUR1 estimation unit 16 and DUR2 communicated from the DUR2 estimation unit 15, the transmission parameter set to be used when the next transmission is performed by the counter station (station 1 in this case), and then, in order to announce to the counter station (station 1), the result is first communicated to the modulation unit 27 (Step S606).

On the other hand, the transmission-parameter estimation unit 26 extracts, from the signals (burst) received by the receiving antenna 13, the transmission parameter set communicated as those to be used, when the next transmission is performed by the counter station (station 1 in this case), by the serving station (station 2 in this case); then, the extracted transmission parameter set is communicated to the modulation unit 27 (Step S608).

The modulation unit 27 modulates, using the transmission parameter set communicated from the transmission-parameter estimation unit 26, the information data series including GI and "Data" (Step S607). The modulation unit 27 further creates the burst, by adding, to the modulated information data series, the transmission parameter set to be used when the next transmission is performed by the counter station (station 1 in this case), the predetermined pilot symbol, and the transmission parameter set such as the modulation type used by the modulation (Step S619); then, the created burst is outputted from the antenna 14 to the wireless transmission channel (Step S609). Then, the signals outputted from the antenna propagate through the wireless transmission channel, and reach the station 1. Moreover, a similar operation to that in the station 2 is also performed in the station 1.

Embodiment 16.

Although an example of a case in which the station 1 and the station 2 have similar configurations to each other has been explained in Embodiment 15, a case in which the configurations between the station 1 and the station2 are different from each other (for example, a case im which the station 1 is a base station, while the station 2 is a mobile terminal) is explained here. In this embodiment, it is assumed that the first transmission parameter set used for the modulation, etc. in the station 1 adaptively varies corresponding to the quality of the wireless transmission channel, while the third parameter set used for the modulation; etc. in the station 2 is predetermined. Moreover, a configuration in which the station 2 specifies a fifth transmission parameter set (first transmission parameter set) to be used by the station 1 is explained here.

The station 1 transmits the signals having the first pilot symbol configured of a plurality of pilot symbols that are known information and are in a predetermined relationship to each other, having the first transmission parameter set that includes the modulation type and means the used fifth transmission parameter set, and having the information data series modulated by this first transmission parameter set. On the other hand, the station2 transmits the signals-having the first pilot symbol, the fifth transmission parameter set to be used by the station 1, and the information data series modulated by the third transmission parameter set that includes the predetermined modulation type.

Fig. 29 is also used in this Embodiment 16. Regarding the configuration of the station 1, the transmission-parameter extraction unit 9, the channel-impulse-response estimation unit 10, the DUR1 estimation unit 16, the DUR2 estimation unit 15, and the modulation-condition selection unit 11 are omitted from the configuration represented in Fig. 22, and the other configuration is the same as that in Embodiment 15. On the other hand, regarding the configuration of the station 2, the transmission-parameter estimation unit 26 is omitted from the configuration represented in Fig. 22.

Moreover, regarding the burst format transmitted from the station 1 to the station 2 in Embodiment 16, the fifth transmission parameter set representing "transmission parameter set to be used by the counter station" is omitted from the burst format represented in Fig. 23. In the burst format transmitted from the station 2 to the station 1, "used transmission parameter set" is omitted from the burst format represented in Fig. 23. Regarding the operational procedure of the station 1, Step S601 of extracting the transmission parameter set, Step S603 of estimating the channel-impulse response, Step S604 of estimating the second desired-signal / undesired-signal ratio, Step S612 of estimating the first desired-signal / undesired-signal ratio, and Step S606 of selecting the transmission parameter set are omitted from the flow chart illustrated in Fig. 24, and the other configuration is the same as that in Embodiment 15. On the other hand; regarding the operational procedure of the station 2, Step S608 of extracting the second transmission parameter set are omitted from the flow chart illustrated in Fig. 24.

Next, an operation is explained. The method of selecting the transmission parameter set in the modulation-condition selection unit is similar to that in Embodiments 1 - 3. The method of calculating DUR1 and DUR2 is similar to that in Embodiment 4 and Embodiment 6. The signals transmitted from the station 1, which are called as the burst, propagate through the wireless transmission channel, and then reach the station 2. In this burst, the first pilot symbol and "Data" modulated by the modulation type (BPSK, QPSK, or 16QAM, etc.) that the station 1 has selected are included, and the modulation type and the coding rate, etc. used here are also included in the burst as the first transmission parameter set.

In the station 2, the transmission-parameter extraction unit 9 extracts, from the signals (burst) received by the receiving antenna 13, the first transmission parameter set such as the modulation type used by the station 1, and then outputs the extracted first transmission parameter set to the demodulation unit 8. The demodulation unit 8 demodulates, using the first transmission parameter set transmitted from the transmission-parameter extraction unit 9, the "Data" signals included in the burst received by the receiving antenna 13 (Step S602).

Moreover, the channel-impulse-response estimation unit 10 estimates the channel-impulse response by calculating the cross-correlation between the signal waveform received by the receiving antenna 13 and the second pilot symbol whose content is the same as that of the first pilot symbol previously held by the station 2; then, the estimated result is communicated to the DUR2 estimation unit 15 (Step S603). The DUR2 estimation unit 15 calculates (estimates) the second desired-signal / undesired-signal ratio (DUR2), similarly to Embodiment 15, based on the channel-impulse-response estimation result; then, this estimated DUR2 is communicated to the modulation-condition selection unit 11 (Step S604). The DUR1 estimation unit 16 estimates the first desired-signal / undesired-signal ratio (DUR1), similarly to Embodiment 15, based on a plurality of pilot symbols "Pilot" included in the signals received by the receiving antenna 13; then, this estimated DUR1 is communicated to the modulation-condition selection unit 11 (Step S612). The modulation-condition selection unit 11 determines, using DUR1 communicated from the DUR1 estimation unit 16 and DUR2 communicated from the DUR2 estimation unit 15, the fifth transmission parameter set to be used when the next transmission is performed by the counter station (station 1 in this case), and then, in order to announce to the counter station 1, first communicates to the modulation unit 27 (Step S606).

The modulation unit 27 modulates, using the third transmission parameter set that has been predetermined and are held by the station 2, the information data series including GI and "Data" (Step S607).

The modulation unit 27 further creates the burst by adding, to the modulated information data series, the previously-held second pilot symbol, as the first pilot symbol, whose content is the same as that of the first pilot symbol, and also by adding the fifth transmission parameter. The burst created by this procedure is outputted from the antenna 14 to the wireless transmission channel (Step S609).

In the burst outputted from the antenna, although the first pilot symbol and "Data" modulated in accordance with the modulation type held by the station 2 are included, the third transmission parameter set used by the station 2 is not included. Accordingly, a high-speed operation of the burst transmission can be achieved. Then, this burst propagates through the wireless transmission channel and reaches the station 1.

In the station 1, the demodulation unit 8 extracts the modulated "Data" signals from the signals (burst) received by the receiving antenna 13; then, the extracted "Data" signals are demodulated, using the fourth transmission parameter set, previously held by the station 1, whose content is the same as that of the third transmission parameter set (Step 5602).

On the other hand, the transmission-parameter estimation unit 26 extracts, from the signals (burst) received from the station 2 by the receiving antenna 13, the fifth transmission parameter set; then, the extracted fifth transmission parameter set is communicated to the modulation unit 27 (Step 5608).

The modulation unit 27 modulates, using the communicated fifth transmission parameter set, the information data series including GI and "Data" (Step S607). The modulation unit 27 further creates the burst by adding, to the modulated information data series, the previously-held third pilot symbol whose content is the same as that of the first pilot symbol and the fifth transmission parameter set used for the modulation, as the first pilot symbol and the first transmission parameter set, respectively (Step S619). The burst created by this procedure is outputted from the antenna 14 to the wireless transmission channel (Step S609). Then, the signals outputted from the antenna propagate through the wireless transmission channel, and reach the station 2. Moreover, the same operation as the above is performed again in the station 2. The above operation is subsequently repeated between the station 1 and the station 2.

According to this Embodiment 16, in addition to the effect represented in Embodiment 15, because the third transmission parameter set is not transmitted from the station 2 to the station 1, a more high-speed operation of the burst transmission than that in Embodiment 15 can be achieved.

Embodiment 17.

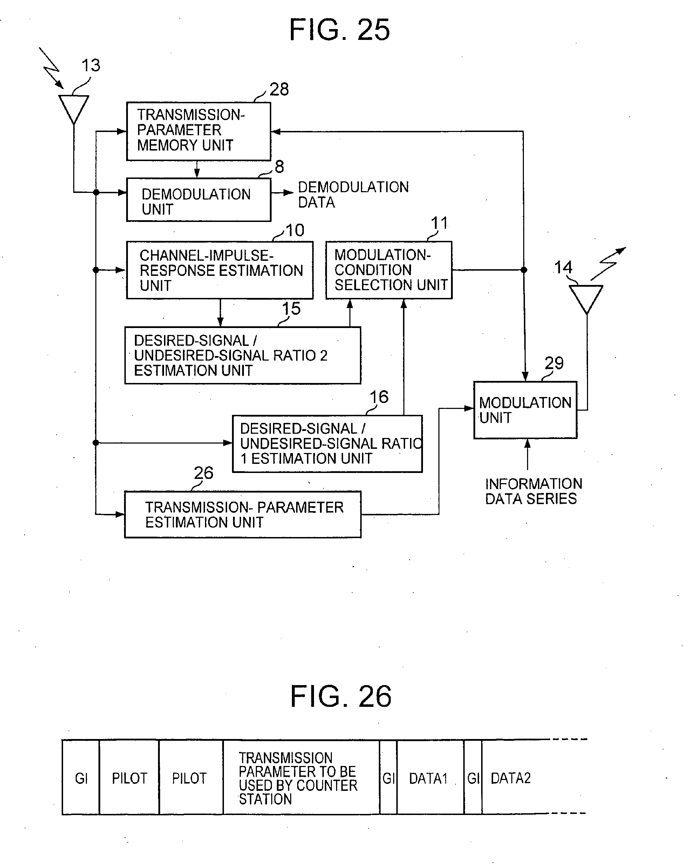

The configuration represented in Fig. 29 is also used in-Embodiment 17; here, although it can be also applied to a case in which the configurations between the station and the station 2 are different from each other, in order to simplify the explanation, the configurations between the station 1 and the station 2 are assumed to be identical to each other. Fig. 25 is a configuration view illustrating Embodiment 17 of a communication system according to the present invention. In Fig. 25, the same symbols as those in Fig. 1, Fig. 10, Fig. 13, Fig. 16, Fig. 19, and Fig. 22 denote the same or equivalent members. As in Fig. 25, the communication system includes a transmission-parameter memory unit 28 for memorizing the transmission parameter set communicated from the modulation-condition selection unit 11 and for communicating the transmission parameter set to the demodulation unit 8 when the next demodulation is performed, and a modulation unit 29 not only for modulating, using the transmission parameter set communicated from the transmission-parameter estimation unit 26, the information data series; but also for inserting into the transmission burst the transmission parameter set to be used by the counter station and the pilot symbol.

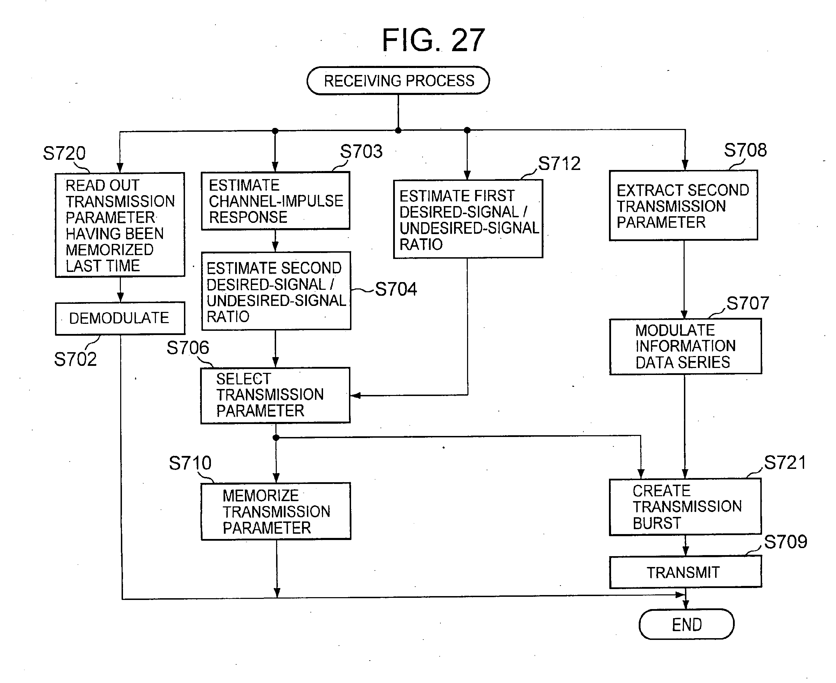

Fig. 26 is a view illustrating an example of a burst format propagating through the broadband wireless transmission channel between the station 1 and the station 2 in Embodiment 17; whereas, the burst format in this figure is the same as that in Fig. 3 except for "transmission parameter set to be used by the counter station" being inserted instead of "used transmission parameter set". Moreover, Fig. 27 is a flowchart illustrating an operation of the station 1 and the station 2 in Embodiment 17.

Next, an operation of Embodiment 17 is explained referring to Fig 25 - Fig. 27. The method of selecting the transmission parameter set in the modulation-condition selection unit is the same as that in Embodiments 1 -3. The method of calculating DUR1 and DUR2 is the same as that in Embodiment 4 and Embodiment 6. As in Fig. 25, the channel-impulse-response estimation unit 10 estimates the channel-impulse response by calculating, similarly to Embodiment 4, the cross-correlation between the signal waveform received by the receiving antenna 13 and the pilot symbol previously held by the station 2; then, the estimation result is communicated to the DUR2 estimation unit 15 (Step S703). The DUR2 estimation unit 15 estimates DUR2, similarly, to Embodiment 4 and Embodiment 6, based on the channel-impulse response estimated by the channel-impulse-response estimation unit 10; then, the estimation result is communicated to the modulation-condition selection unit 11 (Step S704). The DUR1 estimation unit 16 estimates DUR1, similarly to Embodiment 4, based on a plurality of pilot symbols "Pilot" included in the signals received by the receiving antenna 13; then, this estimated DUR1 is communicated to the modulation-condition selection unit 11 (Step S712). The modulation-condition selection unit 11 determines, using DUR1 communicated from the DUR1 estimation unit 16 and DUR2 communicated from the DUR2 estimation unit 15, the transmission parameter set such as the modulation type used when the next transmission is performed by the counter side, and then, not only outputs to the transmission-parameter memory unit 28, but also communicates to the modulation unit 29 (Step S706).

The transmission-parameter memory unit 28 memorizes the transmission parameter set from the modulation-condition selection unit 11 (Step S710). The demodulation unit 8 reads out the transmission parameter set from the transmission-parameter memory unit 28 when the next demodulation is performed (Step S720); then, the signals received by the receiving antenna 13 are demodulated using this transmission parameter set (Step S702). The transmission-parameter estimation unit 26 extracts, from the signals (burst) received by the receiving antenna 13, the transmission parameter set such as the modulation type that is communicated from the counter side and is to be used by the serving station; then, the extracted transmission parameter set is communicated to the modulation unit 29 (Step 5708).

The modulation unit 29 modulates, using the transmission parameter set communicated from the transmission-parameter estimation unit 26, the information data series including GI and "Data" (Step S707).The modulation unit 29 further creates the burst, by adding, to the modulated information data series, the transmission parameter set to be used when the next' transmission is performed by the counter station (station 1 in this case), and the predetermined pilot symbol (Step S721). The burst created by this procedure is outputted from the antenna 14 to the wireless transmission channel (Step S709). Then, the signals outputted from the antenna propagate through the wireless transmission channel, and reach the station 1. Moreover, a similar operation to that in the station 2 is also performed in the station 1.

According to this Embodiment 17, in addition to the effect represented in Embodiment 16, because the signals received by the receiving antenna are demodulated using the stored transmission parameter set, more certain demodulation can be achieved. Moreover, because the transmission parameter set is needless to be transmitted, a high-speed operation can be achieved.

Embodiment 18.

Although an example of a case in which the station 1 and the station 2 have similar configurations to each other has been explained in Embodiment 17, a case in which the configurations between the station 1 and the station2 are different from each other (for example, a case in which the station 1 is a base station, while the station 2 is a mobile terminal) is explained here. In this embodiment, it is assumed that the first transmission parameter set used for the modulation, etc. in the station 1 adaptively varies corresponding to the quality of the wireless transmission channel, while the third parameter set used for the modulation,: etc. in the station 2 is predetermined.

The station 1 transmits the signals having the first pilot symbol configured of a plurality of pilot symbols that are known information and are in a predetermined relationship to each other, and the information data series modulated by the fifth transmission parameter set including the modulation type. On the other hand, the station2 transmits the signals having the first pilot symbol, the fifth transmission parameter set to be used by the station 1, and the information data series modulated by the third transmission parameter set that includes the predetermined modulation type.

Fig. 29 is also used in this Embodiment 18. Regarding the configuration of the station 1, the transmission-parameter memory unit 28, the channel-impulse-response estimation unit 10, the DUR1 estimation unit 16, the DUR2 estimation unit 15, and the modulation-condition selection unit 11 are omitted from the configuration represented in Fig. 25, and the other configuration is the same as that in Embodiment 17. On the other hand, regarding the configuration of the station 2, the transmission-parameter estimation unit 26 is omitted from the configuration represented in Fig. 25.

Moreover, regarding the burst format transmitted from the station 1 to the station 2 in Embodiment 18, the fifth transmission parameter set representing "transmission parameter set to be used by the counter station" is omitted from the burst format represented in Fig. 26. The burst format transmitted from the station 2 to the station 1 is the same as the burst format represented in Fig. 26. Regarding the operational procedure of the station 1, Step S720 of reading out the transmission parameter set that has been memorized last time, Step S703 of estimating the channel-impulse response, Step S704 of estimating the second desired-signal / undesired-signal ratio; Step S712 of estimating the first desired-signal / undesired-signal ratio, Step S706 of selecting the transmission parameter set, and Step S710 of memorizing the transmission parameter set are omitted from the flow chart illustrated in Fig. 27, and the other configuration is the same as that in Embodiment 17. On the other hand, regarding the operational procedure of the station 2, Step S708 of extracting the second transmission parameter set is omitted from the flow chart illustrated in Fig. 27.

Next, an operation is explained. The method of selecting the transmission parameter set in the modulation-condition selection unit is similar to that in Embodiments 1 - 3. The method of calculating DUR1 and DUR2 is similar to that in Embodiment 4 and Embodiment 6. The signals transmitted from the station 1, which are called as the burst, propagate through the wireless transmission channel, and then reaches the station 2. In this burst, the first pilot symbol and "Data" modulated by the modulation type (BPSK, QPSK, or 16QAM, etc.) that the station 1 has selected are included.

In the station 2, the demodulation unit reads out the fifth transmission parameter set memorized in the transmission-parameter memory unit 28 (Step S720); then, the "Data" signals included in the burst received by the receiving antenna 13 are demodulated using the read-out fifth transmission parameter set (Step S702).

Moreover, the channel-impulse-response estimation unit 10, estimates the channel-impulse response by calculating the cross-correlation between the signal waveform received by the receiving antenna 13 and the pilot symbol held by the station 2; then, the estimated result is communicated to the DUR2 estimation unit 15 (Step S703). The DUR2 estimation unit 15 calculates (estimates) the second desired-signal / undesired-signal ratio (DUR2), similarly to Embodiment 17, based on the channel-impulse-response estimation result; then, this estimated DUR2 is communicated to the modulation-condition selection unit 11 (Step S704). The DUR1 estimation unit 16 estimates the first desired-signal / undesired-signal ratio (DUR1), similarly to Embodiment 17, based on a plurality of pilot symbols "Pilot" included in the signals received by the receiving antenna 13; then, this estimated DUR1 is communicated to the modulation-condition selection unit 11 (Step S712). The modulation-condition selection unit 11 determines, using DUR1 communicated from the DUR1 estimation unit 16 and DUR2 communicated from the DUR2 estimation unit 15, the fifth transmission parameter set to be used when the next transmission is performed by the counter station 1, and then, in order to announce to the counter station 1, not only first communicates to the modulation unit 29 (Step S706), but also memorize in the transmission parameter memory unit 28 (Step S710).

The modulation unit 29 modulates, using the third transmission parameter set that has been predetermined and are held by the station 2, the information data series including GI and "Data" (Step S707).

The modulation unit 29 further creates the burst by adding, to the modulated information data series, the previously-held second pilot symbol, as the first pilot symbol, whose content is the same as that of the first pilot symbol, and further by adding the fifth transmission parameter set (Step S721). The burst created by this procedure is outputted from the antenna 14 to the wireless transmission channel (Step S709).

The burst propagates through the wireless transmission channel, and reaches the station 1.

In the station 1, the demodulation unit 8 extracts the modulated "Data" signals from the signals (burst) received by the receiving antenna 13; then, the extracted "Data" signals are demodulated, using the fourth transmission parameter set, previously held by the station 1, whose content is the same as that of the third transmission parameter set (Step S702).

On the other hand, the transmission parameter estimation unit 26 extracts, from the signals (burst) received from the station 2 by the receiving antenna 13, the fifth transmission parameter set; then, the extracted fifth transmission parameter set is communicated to the modulation-unit 29-(Step S708).

The modulation unit 29 modulates, using the communicated fifth transmission parameter set, the information data series including GI and "Data" (Step S707). The modulation unit 27 further creates the burst by adding, to the modulated information data series, the previously-held third pilot symbol whose content is the same as that of the first pilot symbol, as the first pilot symbol (Step S721). The burst created by this procedure is outputted from the antenna 14 to the wireless transmission channel (Step S709). In the burst outputted from the antenna, although the first pilot symbol and "Data" modulated by the fifth transmission parameter set are included, the transmission parameter set to be used by the counter station is not included. Accordingly, a high-speed operation of the burst transmission can be achieved. Then, the signals outputted from the antenna propagate through the wireless transmission channel, and reach the station 2. Moreover; the same operation as the above is performed again in the station 2. The above operation is subsequently repeated between the station 1 and the station 2.

According to this Embodiment 18, in addition to the effect represented in Embodiment 17, because the transmission parameter set to be used by the counter station is not transmitted from the station 1 to the station 2, a more high-speed operation of the burst transmission than that in Embodiment 17 can be achieved.

Here, although an example of burst formats has been illustrated in each embodiment, the present invention is not limited to the examples. For example, in Fig. 11, "channel-impulse-response estimation result" and "used transmission parameter set" may be exchanged.

As explained above, according to the present invention, in the OFDM modulation system, because the modulation condition (modulation type, coding rate, and information transmission speed, etc.) is adaptively changed corresponding to DUR1 and DUR2 having been estimated, an effective can be obtained that at least one of system throughput characteristics and packet error rate characteristics can be improved.

Regarding the channel-impulse-response estimation unit, noise components can be reduced by comparing the cross-correlation value between the received signal waveform and the known pilot symbol with the threshold value, and outputting the cross-correlation value that is larger than the threshold value; therefore, an effect can be obtained that the channel-impulse response can be more exactly estimated, and due to obtaining exact DUR2, a further exact modulation type, etc. can be selected.

The inter-symbol interference components are configured to be included in the interference indicator due to the given symbol included in the delayed wave in which the delay amount exceeds the guard interval; therefore, an effect can be obtained that a further exact transmission parameter set can be selected.

By adding, to the synthesized signal power composed of the advanced-wave signal power and the delayed-wave signal power whose delay is within the guard interval, the given-symbol signal power whose delay exceeds the guard interval, further exact signal power can be obtained; therefore, an effect can be obtained that a further exact transmission parameter set can be selected.

Because the signals received by the receiving antenna are demodulated using the stored transmission parameter set, more certain demodulation can be achieved; moreover, because the transmission parameter set is needless to be transmitted, an effect can be obtained that a high-speed operation of the transmission speed can be achieved.

Moreover, the interference signals, based on signals from other terminals of the serving cell, signals from neighborhood cells, and noises, etc. are estimated, DUR1 is estimated based on the interference signals and the required signals, and the transmission parameter set such as the modulation type applied due to this estimated DUR1 are configured to be determined; therefore, an effect can be obtained that a state can be prevented in which the receiving sensitivity deteriorates due to interference signals, etc. from the neighborhood cells, and the communication is disconnected.

Furthermore, the signals having the information data series modulated using the first transmission parameter set including the predetermined modulation type are received from the network, the information data series is extracted from the received signals, and the extracted information data series is configured to be demodulated using the second transmission parameter set that is previously held and are the same as the first transmission parameter set; therefore, because at least one of the stations does not transmit the second transmission parameter set to the other station, a high-speed operation of the burst transmission can be achieved.

INDUSTRIAL APPLICABILITY

As described above, the modulation condition (modulation type, coding rate, and information transmission speed, etc.) is adaptively changed corresponding to DUR1 and DUR2 estimated in the OFDM modulation-and-demodulation system; therefore, the present invention can be applied to fields of any channel-impulse circumference estimation.

**Claims**

1. A communication apparatus comprising:

a first means for obtaining, based on a received signal, a first desired-signal / undesired-signal ratio being a ratio of a desired signal to an undesired signal using a first interference component including an interference component from another terminal of a cell provided with the communication apparatus, an interference component from another cell, and a noise component;

a second means for obtaining, based on the received signal, a second desired-signal / undesired-signal ratio being a ratio of a desired signal to an undesired signal using a second interference component attributed to a delayed wave;

a modulation-condition selection unit for determining a transmission parameter including a modulation type to be applied by the first desired-signal undesired-signal ratio and the second desired-signal / undesired-signal ratio;

a modulation unit for modulating an information data series to be transmitted using the determined transmission parameter; and

a demodulation unit for extracting from the received signal a transmission parameter used for modulation in a counter station and an information data series, and for demodulating, using the extracted transmission parameter, the extracted information data series.

2. A communication apparatus as recited in claim 1, wherein the second means uses, as the desired signal of the second desired-signal / undesired-signal, electric power of a synthesized signal component composed of an advanced-wave signal component included in the received signal and a delayed-wave signal component whose delay amount is within a guard interval.

3. A communication apparatus as recited in claim 1, wherein the second interference component is at least one of an inter-carrier interference component attributed to a given symbol of the delayed wave when the delay amount exceeds a guard interval, and an inter-symbol interference component attributed to another symbol of the delayed wave when the delay amount exceeds the guard interval.

4. A communication apparatus as recited in claim 1, wherein the first means extracts the first desired-signal / undesired-signal ratio from a signal being transmitted from the counter station and including the first desired-signal / undesired-signal ratio calculated by the counter station, based on a plurality of known information items included in a signal transmitted from a serving station of the apparatus.

5. A communication apparatus as recited in claim 1, wherein the second means extracts the second desired-signal / undesired-signal ratio from a signal being transmitted from the counter station and including the second desired-signal / undesired-signal ratio calculated by the counter station, based on a signal transmitted from a serving station of the apparatus and second known information, previously held by the counter station, being identical or approximately identical to first known information included in the signal.

6. A communication apparatus as recited in claim 1, wherein the first means calculates the first desired-signal / undesired-signal ratio, based on a plurality of known information items included in the received signal.

7. A communication apparatus as recited in claim 1, further comprising a channel-impulse-response estimation unit for calculating a channel-impulse response, based on first known information included in the received signal and previously-held second known information being identical or approximately identical to the first known information, wherein the second means calculates the second desired-signal / undesired-signal ratio, based on the channel-impulse response calculated by the channel-impulse-response estimation unit.

8. A communication apparatus as recited in claim 7, wherein the channel-impulse-response estimation unit compares the channel-impulse response with a previously-held threshold value, and outputs the channel-impulse response when the value thereof is larger than the threshold value.

9. A communication apparatus as recited in claim 1, wherein, in the second means, a signal component is configured for creating the second desired-signal / undesired-signal ratio, by adding, to a synthesized signal component composed of an advanced-wave signal component included in the received signal and a delayed-wave signal component whose delay amount is within a guard interval, a given-symbol signal component included in the delayed wave whose delay amount exceeds the guard interval.

**10.** A communication apparatus as recited in claims 1 to 9, wherein the modulation-condition selection unit determines the transmission parameter, based on whether a combination value of the first desired-signal / undesired-signal ratio and the second desired-signal / undesired-signal ratio is larger than a threshold value.

**11.** A communication apparatus as recited in claim 10, wherein the combination value is given using any one of the upper; middle, and lower equations in Equation set 1:

$$DUR_{syn} = \begin{cases} \left(k_1 \times DUR1^{l_1} + m_1\right) \% \left(k_2 \times DUR2^{l_2} + m_2\right) \\ \log\left\{\left(k_1 \times DUR1^{l_1} + m_1\right) \% \left(k_2 \times DUR2^{l_2} + m_2\right)\right\} \\ \ln\left\{\left(k_1 \times DUR1^{l_1} + m_1\right) \% \left(k_2 \times DUR2^{l_2} + m_2\right)\right\} \end{cases} \qquad (1)$$

where $DUR1$ is the first desired-signal / undesired-signal ratio, $DUR2$ is the second desired-signal / undesired-signal ratio, $k_1$, $k_2$, $l_1$, $l_2$, $m_1$, and $m_2$ each are constant, and % denotes any one of four-arithmetic operation symbols, $+$, $-$, $\times$, and $\div$, and when the value of $DUR1$ is any one of antilogarithms, common logarithms, and natural logarithms; and the value of $DUR2$ is also any one of antilogarithms, common logarithms, and natural logarithms.

**12.** A communication apparatus as recited in claim 1, further comprising a transmission-parameter estimation unit for extracting a transmission parameter from the transmitted signal including the transmission parameter determined by the modulation-condition selection unit to be used by the station being the communication apparatus when the next transmission is performed by the counter station, and for communicating the extracted transmission parameter to the modulation unit, wherein the modulation unit modulates, using the transmission parameter communicated from the transmission-parameter estimation unit instead of using the transmission parameter determined by its own modulation-condition selection unit of the station being the communication apparatus, the information series to be transmitted.

**13.** A communication apparatus as recited in claim 1, further comprising:

a transmission-parameter estimation unit for extracting from the received signal a transmission parameter communicated to be used by the station being the communication apparatus when the next transmission is performed by the counter station, and for : communicating the extracted transmission parameter to the modulation unit; and
a transmission parameter memory unit for memorizing the transmission parameter outputted from the modulation-condition selection unit;
wherein the demodulation unit extracts the transmission parameter used for the modulation by the counter station, and demodulates the extracted transmission parameter, using the memorized transmission parameter instead of the extracted transmission parameter, when the next receiving is performed.

**14.** A communication method comprising:

a first step of obtaining, based on a received signal, a first desired-signal / undesired-signal ratio being a ratio of a desired signal to an undesired signal using a first interference component including an interference component from another terminal of a serving cell, an interference component from neighborhood cells, and a noise component;
a second step of obtaining, based on the received signal, a second desired-signal / undesired-signal ratio being a ratio of a desired signal to an undesired signal using a second interference component attributed to a delayed wave;
a modulation-condition selection step of determining a transmission parameter including a modulation type to be applied by the first desired-signal / undesired-signal ratio and the second desired-signal / undesired-signal ratio;
a modulation step of modulating an information data series to be transmitted using the determined transmission parameter; and
a demodulation step of extracting from the received signal a transmission parameter used for modulation in a counter station and an information data series, and of demodulating, using the extracted transmission parameter, the extracted information data series.

15. A communication method as recited in claim 14, wherein, in the second step, electric power of a synthesized signal component composed of an advanced-wave signal component included in the received signal and a delayed-wave signal component whose delay amount is within a guard interval is used as the desired signal of the second desired-signal / undesired-signal.

16. A communication method as recited in claim 14, wherein the second interference component is at least one of an inter-carrier interference component attributed to a given symbol of the delayed wave when the delay amount exceeds a guard interval, and an inter-symbol interference component attributed to another symbol of the delayed wave when the delay amount exceeds a guard interval,

17. A communication method as recited in claim 14, wherein, in the first step, the first desired-signal / undesired-signal ratio is extracted from a signal being transmitted from the counter station and including the first desired-signal / undesired-signal ratio calculated by the counter station, based on a plurality of known information items included in a signal transmitted from a serving station used for the method.

18. A communication method as recited in claim 14, wherein, in the second step, the second desired-signal / undesired-signal ratio is extracted from a signal being transmitted from the counter station and including the second desired-signal / undesired-signal ratio calculated by the counter station, based on a signal transmitted from a serving station used for the method and second known information, previously held by the counter station, being identical or approximately identical to first known information included in the signal.

19. A communication method as recited in claim 14, wherein, in the first step, the first desired-signal / undesired-signal ratio, based on a plurality of known information items included in the received signal.

20. A communication method as recited in claim 14, further comprising a channel-impulse-response estimation step of calculating a channel-impulse response, based on first known information included in the received signal and previously-held second known information being identical or approximately identical to the first known information, wherein, in the second step, the second desired-signal / undesired-signal ratio, based on the channel-impulse response calculated by the channel-impulse-response estimation unit.

21. A communication method as recited in claim 20, wherein, in the channel-impulse-response estimation step, the channel-impulse response is compared with a previously-held threshold value, and the channel-impulse response is outputted when the value thereof is larger than the threshold value.

22. A communication method as recited in claim 14, wherein; in the second step, a signal component is configured for creating the second desired-signal / undesired-signal ratio, by adding, to a synthesized signal component composed of an advanced-wave signal component included in the received signal and a delayed-wave signal component whose delay amount is within a guard interval, a given-symbol signal component included in the delayed wave whose delay amount exceeds the guard interval.

23. A communication method as recited in claims 14 to 22, wherein, in the modulation-condition selection step, the transmission parameter is determined based on whether a combination value of the first desired-signal / undesired-signal ratio and the second desired-signal / undesired-signal ratio is larger than a threshold value.

24. A communication method as recited in claim 23, wherein the combination value is given using any one of the upper, middle, and lower equations in Equation set 2:

$$DUR_{syn} = \begin{cases} \left(k_1 \times DUR1^{l_1} + m_1\right) \% \left(k_2 \times DUR2^{l_2} + m_2\right) \\ \log\left\{\left(k_1 \times DUR1^{l_1} + m_1\right) \% \left(k_2 \times DUR2^{l_2} + m_2\right)\right\} \\ \ln\left\{\left(k_1 \times DUR1^{l_1} + m_1\right) \% \left(k_2 \times DUR2^{l_2} + m_2\right)\right\} \end{cases} \tag{2}$$

where $DUR1$ is the first desired-signal / undesired-signal ratio,, $DUR2$ is the second desired-signal / undesired-signal ratio, $k_1$, $k_2$, $l_1$, $l_2$, $m_1$, and $m_2$ each are constant, and % denotes any one of four-arithmetic operation symbols,

$+$, $-$, $\times$, and $\div$, and when the value of *DUR1* is any one of antilogarithms, common logarithms, and natural logarithms, and the value of *DUR2* is also any one of antilogarithms, common logarithms, and natural logarithms.

# FIG. 1

# FIG. 2

# FIG. 3

| GI | PILOT | PILOT | USED TRANSMISSION PARAMETER | GI | DATA 1 | GI | DATA 2 |
|---|---|---|---|---|---|---|---|

# FIG. 4

# FIG. 5

EP 1 855 405 A1

| GI | PILOT | PILOT | ······ | GI | DATA 1 | GI | DATA 2 | B5 |

| GI | PILOT | PILOT | ···· | ▓ | GI | DATA 1 | GI | DATA 2 | B6 |

CORRELATION VALUE

0    t                                    TIME

L G I

# FIG. 6

EP 1 855 405 A1

RECEIVED SIGNAL → **401** CORRELATOR → **402** DETERMINATION CIRCUIT → **403** Nth POWER CALCULATOR → **404** INTEGRATOR

PILOT SYMBOL

**405** Mth POWER CALCULATOR

WEIGHTING FACTOR $\alpha$

INTEGRATED VALUE 1

**406** DELAY-AMOUNT DETECTION CIRCUIT → **407** INTEGRATOR

INTEGRATED VALUE 2

WEIGHTING FACTOR $\beta$

**408** DIVIDER → DESIRED-SIGNAL / UNDESIRED-SIGNAL RATIO

# FIG. 7

## FIG. 8

FFT
WINDOW

ADVANCED
WAVE | G1 | DATA(n) | G1 | DATA(n+1) |

LGI

DELAYED DATA(n-1) | G1 | DATA(n) | G1 | DATA(n+1)
WAVE

INTER-SYMBOL
INTERFERENCE

## FIG. 9A

f

## FIG. 9B

f

INTERFERENCE DUE
TO OWN SYMBOL

# FIG. 10

# FIG. 11

| GI | PILOT | PILOT | CHANNEL-IMPULSE-RESPONSE ESTIMATION RESULT | PILOT-SYMBOL EXTRACTION RESULT | USED TRANSMISSION PARAMETER | GI | DATA1 | GI | DATA2 |
|----|-------|-------|---|---|---|----|-------|----|-------|

# FIG. 12

EP 1 855 405 A1

# FIG. 13

# FIG. 14

| GI | PILOT | PILOT | DESIRED-SIGNAL / UNDESIRED-SIGNAL RATIO 2 | PILOT-SYMBOL EXTRACTION RESULT | USED TRANSMISSION PARAMETER | GI | DATA1 | GI | DATA2 |
|----|-------|-------|--------------------------------------------|--------------------------------|-----------------------------|----|-------|----|-------|
|    |       |       |                                            |                                |                             |    |       |    |       |

# FIG. 15

RECEIVING PROCESS

S301 — EXTRACT TRANSMISSION PARAMETER

S303 — ESTIMATE CHANNEL-IMPULSE RESPONSE

S314 — EXTRACT THIRD DESIRED-SIGNAL / UNDESIRED-SIGNAL RATIO

S311 — EXTRACT PILOT SYMBOL

S302 — DEMODULATE

S304 — ESTIMATE SECOND DESIRED-SIGNAL / UNDESIRED-SIGNAL RATIO

S312 — ESTIMATE FIRST DESIRED-SIGNAL / UNDESIRED-SIGNAL RATIO

S306 — SELECT TRANSMISSION PARAMETER

S307 — MODULATE INFORMATION DATA SERIES

S316 — CREATE TRANSMISSION BURST

S309 — TRANSMIT

END

EP 1 855 405 A1

# FIG. 16

13

TRANSMISSION-PARAMETER EXTRACTION UNIT — 9

DEMODULATION UNIT — 8 → DEMODULATION DATA

DESIRED-SIGNAL / UNDESIRED-SIGNAL RATIO 1 EXTRACTION UNIT — 23

DESIRED-SIGNAL / UNDESIRED SIGNAL RATIO 1 ESTIMATION — 16

CHANNEL-IMPULSE-RESPONSE ESTIMATION UNIT — 10

CHANNEL-IMPULSE-RESPONSE EXTRACTION UNIT — 19

MODULATION-CONDITION SELECTION UNIT — 11

DESIRED-SIGNAL / UNDESIRED-SIGNAL RATIO 2 ESTIMATION UNIT — 15

MODULATION UNIT — 24

14

INFORMATION DATA SERIES

# FIG. 17

| GI | PILOT | PILOT | DESIRED-SIGNAL / UNDESIRED-SIGNAL RATIO 1 | CHANNEL-IMPULSE-RESPONSE ESTIMATION RESULT | USED TRANSMISSION PARAMETER | GI | DATA1 | GI | DATA2 |
|----|-------|-------|-------|-------|-------|----|-------|----|-------|

# FIG. 18

( RECEIVING PROCESS )

S401 EXTRACT TRANSMISSION PARAMETER

S410 EXTRACT CHANNEL-IMPULSE RESPONSE

S403 ESTIMATE CHANNEL-IMPULSE RESPONSE

S412 ESTIMATE FIRST DESIRED-SIGNAL / UNDESIRED-SIGNAL RATIO

S415 EXTRACT THIRD DESIRED-SIGNAL / UNDESIRED-SIGNAL RATIO

S402 DEMODULATE

S404 ESTIMATE SECOND DESIRED-SIGNAL / UNDESIRED-SIGNAL RATIO

S406 SELECT TRANSMISSION PARAMETER

S407 MODULATE INFORMATION DATA SERIES

S417 CREATE TRANSMISSION BURST

409 TRANSMIT

( END )

# FIG. 19

# FIG. 20

| GI | PILOT | PILOT | DESIRED-SIGNAL / UNDESIRED-SIGNAL RATIO 1 | DESIRED-SIGNAL / UNDESIRED-SIGNAL RATIO 2 | USED TRANSMISSION PARAMETER | GI | DATA1 | GI | DATA2 |
|----|-------|-------|-------|-------|-------|----|-------|----|-------|
|    |       |       |       |       |       |    |       |    |       |

# FIG. 21

```
                    ( RECEIVING PROCESS )
                             │
    ┌────────────┬───────────┼───────────┬──────────────────────────────────┐
    │            │           │           │                                  │
  S501         S503        S514        S512                                  │
┌───────────┐ ┌───────────┐ ┌─────────────┐ ┌──────────────┐                │
│ EXTRACT   │ │ ESTIMATE  │ │ EXTRACT FOURTH│ │ ESTIMATE FIRST│               │
│ TRANSMISSION│ │ CHANNEL-IMPULSE│ │ DESIRED-SIGNAL /│ │ DESIRED-SIGNAL /│          │
│ PARAMETER │ │ RESPONSE  │ │ UNDESIRED-SIGNAL│ │ UNDESIRED-SIGNAL│              S515
└───────────┘ └───────────┘ │ RATIO       │ │ RATIO        │          ┌──────────────┐
      │             │        └─────────────┘ └──────────────┘          │ ESTIMATE THIRD│
  S502 │            │                                                  │ DESIRED-SIGNAL /│
      ↓             ↓                                                  │ UNDESIRED-SIGNAL│
┌───────────┐ ┌──────────────┐                                        │ RATIO        │
│ DEMODULATE│ │ ESTIMATE SECOND│  S504                                 └──────────────┘
└───────────┘ │ DESIRED-SIGNAL /│                                             │
              │ UNDESIRED-SIGNAL│                                          S506 ↓
              │ RATIO        │                                        ┌──────────────┐
              └──────────────┘                                        │ SELECT       │
                                                                      │ TRANSMISSION │
                                                                      │ PARAMETER    │
                                                                      └──────────────┘
                                                                          S507 ↓
                                                                      ┌──────────────┐
                                                                      │ MODULATE     │
                                                                      │ INFORMATION  │
                                                                      │ DATA SERIES  │
                                                                      └──────────────┘
                                                                          S518 ↓
                                                                      ┌──────────────┐
                                                                      │ CREATE       │
                                                                      │ TRANSMISSION │
                                                                      │ BURST        │
                                                                      └──────────────┘
                                                                          S509 ↓
                                                                      ┌──────────────┐
                                                                      │ TRANSMIT     │
                                                                      └──────────────┘
                                                                              │
                                                                          ( END )
```

EP 1 855 405 A1

# FIG. 22

# FIG. 23

| GI | PILOT | PILOT | TRANSMISSION PARAMETER TO BE USED BY COUNTER STATION | USED TRANSMISSION PARAMETER | GI | DATA1 | GI | DATA2 |
|----|-------|-------|---|---|----|-------|----|-------|

# FIG. 24

RECEIVING PROCESS

S601 — EXTRACT TRANSMISSION PARAMETER

S602 — DEMODULATE

S603 — ESTIMATE CHANNEL-IMPULSE RESPONSE

S604 — ESTIMATE SECOND DESIRED-SIGNAL / UNDESIRED-SIGNAL RATIO

S608 — EXTRACT SECOND TRANSMISSION PARAMETER

S607 — MODULATE INFORMATION DATA SERIES

S612 — ESTIMATE FIRST DESIRED-SIGNAL / UNDESIRED-SIGNAL RATIO

S606 — SELECT TRANSMISSION PARAMETER

S619 — CREATE TRANSMISSION BURST

S609 — TRANSMIT

END

EP 1 855 405 A1

# FIG. 25

# FIG. 26

| GI | PILOT | PILOT | TRANSMISSION PARAMETER TO BE USED BY COUNTER STATION | GI | DATA1 | GI | DATA2 |
|----|-------|-------|---|----|-------|----|-------|

# FIG. 27

```
                    ( RECEIVING PROCESS )
```

**S720**
READ OUT TRANSMISSION PARAMETER HAVING BEEN MEMORIZED LAST TIME

**S703**
ESTIMATE CHANNEL-IMPULSE RESPONSE

**S712**
ESTIMATE FIRST DESIRED-SIGNAL / UNDESIRED-SIGNAL RATIO

**S708**
EXTRACT SECOND TRANSMISSION PARAMETER

**S702**
DEMODULATE

**S704**
ESTIMATE SECOND DESIRED-SIGNAL / UNDESIRED-SIGNAL RATIO

**S707**
MODULATE INFORMATION DATA SERIES

**S706**
SELECT TRANSMISSION PARAMETER

**S710**
MEMORIZE TRANSMISSION PARAMETER

**S721**
CREATE TRANSMISSION BURST

**S709**
TRANSMIT

( END )

EP 1 855 405 A1

# FIG. 28

# FIG. 29

EP 1 855 405 A1

# FIG. 30

# FIG. 31

52

# FIG. 32A

# FIG. 32B

# FIG. 33

## FIG. 34

## FIG. 35

# FIG. 36

# FIG. 37

# FIG. 38

# FIG. 39

## INTERNATIONAL SEARCH REPORT

| | International application No. |
|---|---|
| | PCT/JP2005/023010 |

A. CLASSIFICATION OF SUBJECT MATTER
*H04J11/00*(2006.01), *H04B7/26*(2006.01)

According to International Patent Classification (IPC) or to both national classification and IPC

B. FIELDS SEARCHED

Minimum documentation searched (classification system followed by classification symbols)
H04B7/26, H04J11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
IEEEXplore

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-324407 A (Mitsubishi Electric Corp.),<br>14 November, 2003 (14.11.03),<br>Full text; all drawings<br>(Family: none) | 1-9,12-22<br>10,11,23,24 |
| Y | Tsutomu USUI et al., "OFDM Henfukucho Hoshiki ni Okeru 2 Shurui no DUR o Mochiita Tekio Hencho Gijutsu no Ichi Kento", IEICE Technical Report RCS2003-142, 10 October, 2003 (10.10.03), pages 19 to 24 | 10,11,23,24 |
| Y | Tsutomu USUI et al., "OFDM ni Okeru Tekio Hencho Gijutsu ni Kansuru Ichi Kento", IEICE Technical Report RCS2002-126, 12 July, 2002 (12.07.02), pages 43 to 48 | 10,11,23,24 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 February, 2006 (21.02.06) | Date of mailing of the international search report<br>07 March, 2006 (07.03.06) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A NEW FREQUENCY-DOMAIN LINK ADAPTATION SCHEME FOR BROADBAND OFDM SYSTEMS. VTC'99. 253-257